(19) 

**Europäisches Patentamt**

**European Patent Office**

**Office européen des brevets**

(11) **EP 4 309 330 B1**

(12) **EUROPEAN PATENT SPECIFICATION**

(45) Date of publication and mention
of the grant of the patent:
**27.11.2024 Bulletin 2024/48**

(21) Application number: **21718870.5**

(22) Date of filing: **14.04.2021**

(51) International Patent Classification (IPC):
*H04L 9/32* (2006.01)        *H04W 12/069* (2021.01)
*H04L 9/40* (2022.01)

(52) Cooperative Patent Classification (CPC):
**H04W 12/069; H04L 9/3242; H04L 63/0414;
H04L 63/126**

(86) International application number:
**PCT/EP2021/059671**

(87) International publication number:
**WO 2022/218523 (20.10.2022 Gazette 2022/42)**

(54) **JOINT DATA SOURCE IDENTIFICATION AND AUTHENTICATION**

GEMEINSAME IDENTIFIZIERUNG UND AUTHENTIFIZIERUNG VON DATENQUELLEN

IDENTIFICATION ET AUTHENTIFICATION CONJOINTES DE SOURCES DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.01.2024 Bulletin 2024/04**

(73) Proprietor: **Huawei Technologies Co., Ltd.
Longgang
Shenzhen, Guangdong 518129 (CN)**

(72) Inventors:
• **SORET-ALVAREZ, Beatriz
9100 Aalborg (DK)**
• **KALØR, Anders, Ellersgaard
9100 Aalborg (DK)**
• **HAGELSKJÆR, Alexander, Korsvang
9100 Aalborg (DK)**
• **LEYVA-MAYORGA, Israel
9100 Aalborg (DK)**
• **KOTABA, Radoslaw
9100 Aalborg (DK)**
• **POPOVSKI, Petar
9100 Aalborg (DK)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2019/040963     US-A1- 2016 100 311**

• **3GPP: "3rd Generation Partnership Project;
Technical Specification Group Services and
System Aspects; Rationale and track of security
decisions in Long Term Evolved (LTE) RAN /
3GPP System Architecture Evolution (SAE)
(Release 8)", 3GPP DRAFT;
S3-070478-TR33821-V030-TR, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. SA WG5, no. Roma;
20070830, 30 August 2007 (2007-08-30),
XP050306096**
• **MENEZES A J ET AL: "Handbook of Applied
Cryptography, PASSAGE", 1 January 1997,
HANDBOOK OF APPLIED CRYPTOGRAPHY;
[CRC PRESS SERIES ON DISCRETE
MATHEMATICES AND ITS APPLICATIONS], CRC
PRESS, BOCA RATON, FL, US, PAGE(S) I - II, 352,
ISBN: 978-0-8493-8523-0, XP002357451**

## Description

### TECHNICAL FIELD

The present disclosure generally relates to the field of data communications. In particular, some embodiments of the disclosure relate to authenticated data transmission.

### BACKGROUND

Protecting the integrity and confidentiality of data transmission may be desired in communication systems. For example, different authentication methods may be applied to ensure that data has been received from an authenticated user. Furthermore, encryption may be applied to prevent third parties from reading data intended to a particular user. Data packets may indicate an identifier of the data source. In cryptography, a message authentication code (MAC) may refer to a field of information, which may be used at a receiver to ensure that the received data packet has really originated from the indicated data source.

WO 2019/040963 A1 discloses a method for determining a terminal ID from a message received from a terminal in a communication system that avoids sending the terminal ID in the clear. In this system each terminal ID has an associated encryption key. A transmitted message comprises at least a Message Authentication Code (MAC), a n-bit hash, and encrypted message text. At least the terminal key and a nonce is used to generate the MAC, and neither the terminal ID nor the terminal key are included in the transmitted message. An authentication broker stores the set of all (terminal ID, terminal key) pairs for the plurality of terminals in the communication system. The set of all terminal keys is grouped into at least two partitions, and on receipt of a message the authentication broker identifies the partition that includes the terminal key of the terminal that transmitted the received message using the n-bit hash (the search partition). The authentication broker then searches the search partition for the terminal key that authenticates the MAC to identify the terminal ID. In some examples, this involves testing each terminal key in the search partition to determine if it authenticates the MAC, and if a terminal key is found that authenticates the MAC, then the terminal ID can be identified using knowledge of the (terminal key, terminal ID) pairings.

3GPP "3rd Generation Partnership Project; Technical Specification Group Services and System Aspects; Rationale and track of security decisions in Long Term Evolved (LTE) RAN / 3GPP System Architecture Evolution (SAE) (Release 8)" (3GPP DRAFT; S3-070478-TR33821-V030-TR, 3RD GENERATION PARTNERSHIP PROJECT (3GPP), MOBILE COMPETENCE CENTRE, SOPHIA-ANTIPOLIS, FRANCE, vol. SA WG5, no. Roma; 20070830) discloses in section 5 considerations and improvements regarding the usage of temporary RAN identifiers for user equipment.

US 2016/100311 A1 discloses techniques to improve secure user authentications in Bluetooth Low Energy communications.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective of the present disclosure to provide joint identification and authentication of data sources with reduced transmission overhead. The foregoing and other objectives may be achieved by the features of the independent claims. Further implementation forms are apparent from the dependent claims, the description, and the drawings.

According to a first aspect, a device for generating a data packet is disclosed. The device is configured to: obtain payload data associated with a data source; compute a message authentication code based on a unique key of the data source and the payload data, wherein the unique key of the data source is unique within a plurality of data sources; obtain an auxiliary identifier for the data source, wherein a size of the auxiliary identifier is smaller than a size of an identifier of the data source, wherein the auxiliary identifier is ambiguous within the plurality of data sources and the identifier of the data source is unambiguous within the plurality of data sources; determine a checksum based on the payload data, the message authentication code, and the auxiliary identifier, wherein determining the checksum based on the payload data, the message authentication code, and the auxiliary identifier comprises performing an exclusive-or operation for the checksum with the auxiliary identifier; and generate the data packet, wherein the data packet comprises the payload data, the message authentication code, and the checksum and wherein the data packet does not include an explicit identifier of the data source. This solution enables identification and authentication of data sources with reduced transmission overhead.

According to an implementation form of the first aspect, the device is configured to perform an exclusive-or operation for the checksum with the auxiliary identifier. This solution enables to scramble the auxiliary identifier, thereby improving security. According to an implementation form of the first aspect, the device may be further configured to determine the auxiliary identifier as a function of the identifier of the data source. This solution enables auxiliary identifiers to be determined locally at a transmitter and thereby to reduce the required amount of memory, since preconfiguration of auxiliary identifiers at the transmitter may be avoided.

According to an implementation form of the first aspect, the auxiliary identifier may comprise a subset of bits of the identifier of the data source. This solution enables to determine the auxiliary identifier with low complexity. According to an implementation form of the first aspect, the identifier of the data source is unambiguous within a plurality of data sources. This solution enables each data source to be unambiguously identified.

According to an implementation form of the first aspect, the auxiliary identifier is ambiguous within the plurality of data sources. This solution enables reduced transmission overhead with moderate complexity at a receiver. According to an implementation form of the first aspect, the device may be further configured to compute the message authentication code further based on the identifier of the data source. This solution improves security of data source identification and authentication.

According to an implementation form of the first aspect, the device may be further configured to receive a cryptographic nonce. The device may be configured to compute the message authentication code further based on the cryptographic nonce. This solution improves security of data source identification and authentication.

According to a second aspect, a device for identifying a data source is provided. The device is configured to: receive a data packet associated with a data source, wherein the data packet comprises payload data, a message authentication code and a checksum; determine an auxiliary identifier for the data source based on the checksum of the data packet, wherein a size of the auxiliary identifier is smaller than a size of an identifier of the data source, wherein the auxiliary identifier is ambiguous within a plurality of data sources and the identifier of the data source is unambiguous within the plurality of data sources; determine a plurality of candidate data sources as a subset of a plurality of data sources, wherein the subset of the plurality of data sources is associated with the auxiliary identifier; compute a plurality of candidate message authentication codes based on the payload data and a plurality of unique keys associated with the plurality of candidate data sources; and determine the identifier of the data source based on detecting a match between the message authentication code and one candidate message authentication code of the plurality of candidate message authentication codes. This solution enables identification and authentication of the data source with reduced transmission overhead.

According to an implementation form of the second aspect, the data packet further comprises a checksum and the device may be further configured to determine the auxiliary identifier for the data source based on the checksum of the data packet, wherein a size of the auxiliary identifier is smaller than a size of the identifier of the data source; and determine the plurality of candidate data sources as a subset of a plurality of data sources, wherein the subset of the plurality of data sources is associated with the auxiliary identifier. This solution enables identification and authentication of the data source with reduced transmission overhead and moderate complexity at a receiver due to a limited subset of candidate data sources.

According to an implementation form of the second aspect, the device may be further configured to compute an auxiliary checksum based on the payload data and the message authentication code; and determine the auxiliary identifier based on an exclusive-or operation between the checksum of the data packet and the auxiliary checksum. This solution enables a receiver to determine the subset of candidate data sources and thereby to reduce complexity at the receiver.

According to an implementation form of the second aspect, the auxiliary identifier may comprise a subset of bits of the identifier of the data source. This solution enables to determine the auxiliary identifier with low complexity. According to an implementation form of the second aspect, the identifier of the data source is unambiguous within the plurality of data sources. This solution enables each data source to be unambiguously identified.

According to an implementation form of the second aspect, the auxiliary identifier is ambiguous within the plurality of data sources. This solution enables reduced transmission overhead with moderate complexity at a receiver, since the auxiliary identifier identifies a subset of data sources.

According to an implementation form of the second aspect, the device may be further configured to determine a plurality of auxiliary identifiers for the plurality of data sources as a function of identifiers of the plurality of data sources. This solution enables auxiliary identifiers to be determined locally at a receiver and thereby to reduce the required amount of memory, since preconfiguration of auxiliary identifiers at the receiver may be avoided. According to an implementation form of the second aspect, the device may be further configured to compute the plurality of candidate message authentication codes further based on identifiers of the plurality of candidate data sources. This solution improves security of data source identification and authentication.

According to an implementation form of the second aspect, the device may be further configured to compute the plurality of candidate message authentication codes further based on a cryptographic nonce. This solution improves security of data source identification and authentication.

According to a third aspect, a method for generating a data packet is provided. The method comprises obtaining payload data associated with a data source; computing a message authentication code based on a unique key of the data source and the payload data, wherein the unique key of the data source is unique within a plurality of data sources; obtaining an auxiliary identifier for the data source, wherein a size of the auxiliary identifier is smaller than a size of an identifier of the data source, wherein the auxiliary identifier is ambiguous within the plurality of data sources and the identifier of the data source is unambiguous within the plurality of data sources; determining a checksum based on the payload data, the message authentication code, and the auxiliary identifier, wherein determining the checksum based on the payload data, the message authentication code, and the auxiliary identifier comprises performing an exclusive-or operation for the checksum with the auxiliary identifier; and generating the data packet, wherein the data packet comprises the payload data, the message authentication code, and the checksum and wherein the data packet does not include an explicit identifier of the data source. This solution enables identification and authentication of the data source with reduced transmission overhead.

According to a fourth aspect, a method for identifying a data source is provided. The method comprises receiving a data packet associated with a data source, wherein the data packet comprises payload data, a message authentication code and a checksum; determining an auxiliary identifier for the data source based on the checksum of the data packet, wherein a size of the auxiliary identifier is smaller than a size of an identifier of the data source, wherein the auxiliary identifier is ambiguous within a plurality of data sources and the identifier of the data source is unambiguous within the plurality of data sources; determining a plurality of candidate data sources as a subset of a plurality of data sources, wherein the subset of the plurality of data sources is associated with the auxiliary identifier; computing a plurality of candidate message authentication codes based on the payload data and a plurality of unique keys associated with the plurality of candidate data sources; and determining the identifier of the data source based on detecting a match between the message authentication code and one candidate message authentication code of the plurality of candidate message authentication codes. This solution enables identification and authentication of the data source with reduced transmission overhead.

According to a fifth aspect, a computer program is provided. The computer program may comprise program code configured to cause performance of any implementation form of the method of the third aspect, when the computer program is executed on a computer.

According to a sixth aspect, a computer program is provided. The computer program may comprise program code configured to cause performance of any implementation form of the method of the fourth aspect, when the computer program is executed on a computer.

Implementation forms of the present disclosure can thus provide devices, methods, and computer programs for generating or receiving a chirp waveform. These and other aspects of the present disclosure will be apparent from the example embodiment(s) described below.

## DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:

FIG. 1 illustrates an example of a communication system, according to an embodiment of the disclosure;

FIG. 2 illustrates an example of a device configured to practice one or more embodiments of the disclosure;

FIG. 3 illustrates an example of a data packet for identification and authentication of a data source;

FIG. 4 illustrates an example of a data packet with a joint MAC and address field, according to an embodiment of the disclosure;

FIG. 5 illustrates an example of a procedure for data source identification based on a joint MAC and address field, according to an embodiment of the disclosure;

FIG. 6 illustrates an example of a data packet with a joint MAC and address field and a checksum field, according to an embodiment of the disclosure;

FIG. 7 illustrates an example of a procedure for generating data packets with a joint MAC and address field and a checksum field, according to an embodiment of the disclosure;

FIG. 8 illustrates an example of a procedure for data source identification based on a joint MAC and address field and a checksum field, according to an embodiment of the disclosure;

FIG. 9 illustrates performance analysis results for different data source identification and authentication schemes, according to an embodiment of the disclosure;

FIG. 10 illustrates an example of overhead reduction for a data source identification and authentication scheme based on a joint MAC and address field, according to an embodiment of the disclosure;

FIG. 11 illustrates an example of overhead reduction for a data source identification and authentication scheme based on a joint MAC and address field and a checksum field, according to an embodiment of the disclosure;

FIG. 12 illustrates an example of spectral efficiency for a reference scheme and a data source identification and authentication scheme based on a joint MAC and address field, according to an embodiment of the disclosure;

FIG. 13 illustrates an example of spectral efficiency for a reference scheme and a data source identification and authentication scheme based on a joint MAC and address field and a checksum field, according to an embodiment of the disclosure;

FIG. 14 illustrates an example of signal-to-noise ratio (SNR) gain for a data source identification and authentication scheme based on a joint MAC and address field, according to an embodiment of the disclosure;

FIG. 15 illustrates an example of signal-to-noise ratio (SNR) gain for a data source identification and authentication scheme based on a joint MAC and address and a checksum field, according to an embodiment of the disclosure;

FIG. 16 illustrates examples of complexities of data source identification and authentication schemes based on a joint MAC and address field, with and without a checksum field, according to an embodiment of the disclosure;

FIG. 17 illustrates an example of complexity with respect to overhead reduction for a data source identification and authentication scheme based on a joint MAC and address field and a checksum field, according to an embodiment of the disclosure;

FIG. 18 illustrates an example of MAC collision probability with respect to a number of nodes for data source identification and authentication schemes based on a joint MAC and address field, with and without a checksum field, according to an embodiment of the disclosure;

FIG. 19 illustrates an example of a method for generating a data packet, according to an embodiment of the disclosure; and

FIG. 20 illustrates an example of a method for identifying a data source, according to an embodiment of the disclosure.

Like references are used to designate like parts in the accompanying drawings.

## DETAILED DESCRIPTION

Reference will now be made in detail to example embodiments, examples of which are illustrated in the accompanying drawings. The detailed description provided below in connection with the appended drawings is intended as a description of the present embodiments and is not intended to represent the only forms in which the present examples may be constructed or utilized. The description sets forth the functions of the examples and the sequence of operations for constructing and operating the examples. However, the same or equivalent functions and sequences may be accomplished by different examples.

Unsourced random access provides a framework for modelling and analyzing massive and uncoordinated random access technologies as applied for example in massive internet-of-things (IoT) communications. In an unsourced random access framework, users may use the same modulation codebook, which may cover both pilot and data symbols. Therefore, it may not be possible to distinguish one user from another at the physical (PHY) layer. This is in contrast to systems where users use the same constellation, for example a quadrature amplitude modulation (QAM) constellation, but can be distinguished via their user-specific pilot sequences. In some systems, a multi-user decoder may output the received data packets up to a permutation between active users and a user identifier (ID) may be included in the data payload to resolve the lack of ID at the PHY layer.

Accordingly, unsourced random access schemes may lack the possibility of identifying the transmitting users. Embodiments disclosed herein provide several methods for identifying and authenticating data sources, for example users or nodes. The disclosed embodiments provide joint identification and authentication protocols, which are based on the message authentication code (MAC) field instead of an explicit data source identifier field, for example an explicit address field. The MAC field may be unique for each data source, since it may be generated from a unique private key. As a result, an address field that includes an explicit identifier for the data source is not required anymore. Additionally, the disclosed methods provide the advantage of decreasing the overhead caused by explicit data source identifiers in packet headers. This advantage can be obtained without a need for protocols designed specifically for the unsourced random access scenario. Furthermore, the disclosed methods can provide better performance for short data packets also in a point-to-point scenario.

According to an embodiment, payload data may be obtained for transmission. The payload data may be associated with a data source. A message authentication code may be computed based on a unique key of the data source and the payload data. Furthermore, an auxiliary identifier for the data source may be obtained. The auxiliary identifier may be of shorter size than an identifier of the data source. Upon receipt, a set of candidate message authentication codes may be computed based on the payload data and unique keys associated with a set of candidate data sources and the data source may be identified based on a match between the received message authentication code and one of the candidate message authentication codes. Furthermore, the match may be detected based on searching within a subset of candidate data sources identified by the auxiliary identifier.

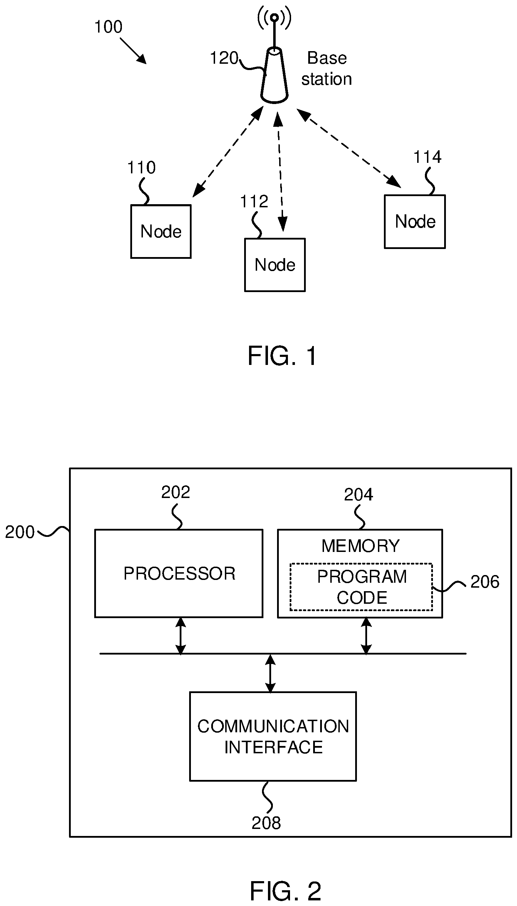

FIG. 1 illustrates an example of a communication system 100 comprising a node 110 and a base station 120. The communication system 100 may further comprise one or more other nodes 112, 114. Base station 120 may therefore communicate with a plurality of nodes. Node 110 is provided as an example of a device that generates authenticated data packets. Node 110 may operate as a data source. Node 110 may comprise a transmitter for transmitting the authenticated data packets to base station 120. Node 110 may comprise an internet-of-things (IoT) device such as, for example, a tag, a sensor, a tracker, a wearable device, a smart home appliance, an autonomous vehicle, or the like. Alternatively, or additionally, node 110 may comprise a user equipment (UE) such as, for example, a mobile phone, a smart phone, a smart watch, a tablet, a laptop, or the like.

Base station 120 is provided as an example of a receiver that identifies the data source. The base station 120 may also confirm authenticity of the received data packets. Base station 120 may comprise an access point of a radio access network (RAN) such as, for example, a 3G, 4G, or 5G cellular communication network or a wireless local are network (WLAN). Nodes 110, 112, 114 and base station 120 may be configured to operate based on a standard, for example, one or more machine type communication (MTC) functions of the 3rd Generation Partnership Project (3GPP) 5G New Radio (NR) standard. Base station 120 may therefore comprise a 5th generation base station (gNB). It is however noted that the embodiments of the present disclosure may be applied in data communications between various type of devices, for example, over a direct radio interface between nodes 110, 112, 114, or other devices. Embodiments may be applied also in wired data communications.

In a massive multiple access scenario, a large number of nodes may transmit small packets to the base station 120. In general, a receiver may perform data source identification, authentication, and/or encryption. While encryption may not introduce additional overhead, identification and authentication may involve transmission of additional bits together with information bits (payload data). This may result in an enormous overhead in case of short packets with small data payloads, as envisioned in the considered massive multiple access scenario. Therefore, it may be desirable to reduce the overhead caused by data source identification and/or authentication.

Even though some embodiments have been described using a node as an example of a data source, it is appreciated that embodiments may be generalized to communication systems, where a node comprises more than one data source or is associated with one or more external data sources. For example, a node could provide packet generation services for a plurality of data sources. A data source may comprise a device, an application, a software or hardware component, or the like. A data source may be identifiable by an identifier that is unique within a plurality of data sources, for example by an address of the data source.

FIG. 2 illustrates an example of a device 200 configured to practice one or more embodiments. Device 200 may be, for example, configured to generate authenticated data packets and/or authenticate received data packets. Device 200 may comprise at least one processor 202. The at least one processor 202 may comprise, for example, one or more of various processing devices, such as, for example, a co-processor, a microprocessor, a controller, a digital signal processor (DSP), a processing circuitry with or without an accompanying DSP, or various other processing devices including joint circuits such as, for example, an application specific joint circuit (ASIC), a field programmable gate array (FPGA), a microcontroller unit (MCU), a hardware accelerator, a special-purpose computer chip, or the like.

The device 200 may further comprise at least one memory 204. The memory 204 may be configured to store, for example, computer program code or the like, for example, operating system software and application software. The memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.).

Device 200 may further comprise a communication interface 208 configured to enable the device 200 to transmit and/or receive information. The communication interface 208 may comprise an internal communication interface within a data source, a transmitter, a receiver, or a transceiver device. Alternatively, or additionally, the communication interface 208 may be configured to provide at least one external wireless radio connection, such as, for example, a 3GPP mobile broadband connection (e.g. 3G, 4G, 5G), a wireless local area network (WLAN) connection such as, for example, standardized by IEEE 802.11 series or Wi-Fi alliance, a short-range wireless network connection such as, for example, a Bluetooth connection. The communication interface 208 may hence comprise one or more antennas to enable transmission and/or reception of radio frequency signals over the air.

The device 200 may further comprise other components and/or functions such as, for example, a user interface (not shown) comprising at least one input device and/or at least one output device. The input device may take various forms such a keyboard, a touch screen, or one or more embedded control buttons. The output device may for example comprise a display, a speaker, a vibration motor, or the like.

When the device 200 is configured to implement some functionality, some component and/or components of the device, such as, for example, the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an embodiment, the device 200 comprises a processor or processor circuitry, such as, for example, a microcontroller, configured by the program code 206, when executed, to execute the embodiments of the operations and functionality described herein. Alternatively, or in addition, the functionality described herein can be performed, at least in part, by one or more hardware logic components. For example, and without limitation, illustrative types of hardware logic components that can be used include field-programmable gate arrays (FPGAs), application-specific joint circuits (ASICs), application-specific standard products (ASSPs), system-on-a-chip systems (SOCs), complex programmable logic devices (CPLDs), graphics processing units (GPUs), or the like.

The device 200 may be configured to perform method(s) described herein or comprise means for performing method(s) described herein. In one example, the means comprises the at least one processor 202, the at least one memory 204 including program code 206 configured to, when executed by the at least one processor 202, cause the device 200 to perform the method(s).

The device 200 may comprise, for example, a node, a base station, a transmitter, a receiver, a transceiver, an authentication module, authentication circuitry, or the like. Although the device 200 is illustrated as a single device, it is appreciated that, wherever applicable, functions of the device 200 may be distributed to a plurality of devices, for example between components of a device.

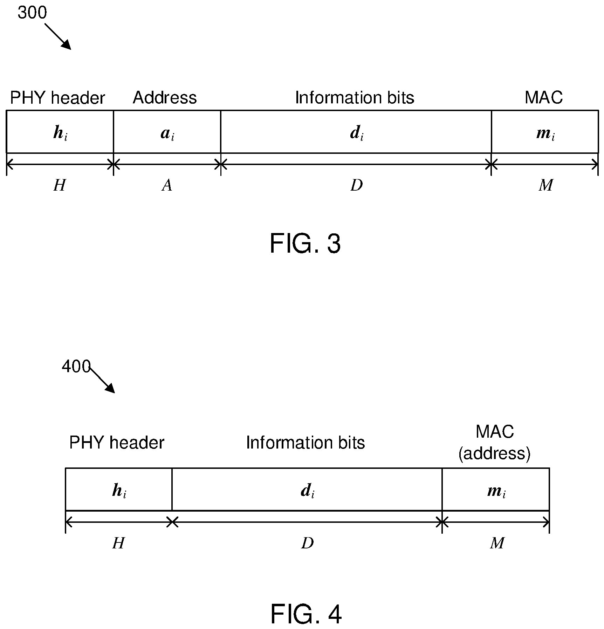

FIG. 3 illustrates an example of a data packet 300 for identification and authentication of a node. A data packet may be also called a message. The data packet 300 may be applied in a communication system comprising $K$ nodes that transmit data packets containing $D$ information bits, for example to the base station 120 using uplink (UL) transmission. The $K$ nodes are provided as examples of data sources. The data packet 300 sent by the $i$-th node may comprise a header $h_i$, an address field $a_i$, information bits (payload data) $d_i$, and a message authentication code (MAC) $m_i$. The header $h_i$, where $h_i \in \{0,1\}^H$, may comprise a physical-layer packet header of size $H$. The header may be encoded separately from the rest of the data packet 300 and it may include information for decoding the remaining parts of the data packet 300. It is however possible that the data packet 300 does not include a header. For example, information included in the header may be provided to the base station 120 by other means.

The address field $a_i$, where $a_i \in \{0,1\}^A$, may comprise an address of the $i$-th node. The address may be unambiguous, i.e. unique, within the $K$ nodes. The address field is provided as an example of an explicit data source identifier. The address field may not carry other information and it may serve for the sole purpose of identifying the node 110. The size of the address field may be A. The address field may comprise a layer two (L2) address, where layer two may refer to the link layer according to the OSI (Open Systems Interconnection) model or a layer structure of a particular standard. The information bits $d_i$, where $d_i \in \{0,1\}^D$, may comprise payload data of size $D$. The payload data may comprise encrypted data. It is however noted that embodiments described herein may be also applied to non-encrypted data. The MAC $m_i$, where $m_i \in \{0,1\}^M$, may be of size $M$.

The data fields $h_i$, $a_i$, $d_i$, $m_i$ may be binary data fields comprising a set of bits. A size of a data field may indicate a length of the data field, for example, as the number of bits, or some other measure of transmission resources needed for transmitting the data field. The size of the data packet 300 may be therefore equal to $H + A + D + M$. The data fields of data packet 300 may be in any suitable order. This also applies to any data packet disclosed herein. The data packet 300 may, for example, have the following structure:

$$[h_i, a_i, d_i, m_i] \qquad (1)$$

An unambiguous identification of the $K$ different nodes may be achieved by an address field comprising $A = \log_2(K)$ bits. Here, $K$ represents the maximum number of supported nodes in the system, which may be larger than the number of simultaneously active nodes. An authentication of a transmitting node based on data packet 300 may be performed, for example, based on symmetric key cryptography and the use of a cryptographic nonce $b$. The nonce may comprise an arbitrarily selected number or a bit sequence, which may change from time to time, for example between consecutive transmissions. Each of the $K$ nodes may be associated with a private (secret) key $k_i$. The private key may be unique within the $K$ nodes and therefore each of the $K$ nodes may be associated with a different private key. The private key may comprise a sequence of bits. The private key may be specific to a particular node, or in general specific to a particular data source. The private keys $k_i$ of the $K$ nodes (i = 1 ... K) may be known to the base station 120. Prior to data transmission, the base station 120 may select the nonce, for example, randomly and, for example, from a uniform key space and distribute it to the $K$ nodes. A transmitting node may then perform a signing algorithm to generate the MAC field based on the nonce and its private key. The MAC may be computed from the encrypted data $d_i$ (encode-then-sign) using a predefined function $f_{auth}(\cdot)$, for example based on

$$m_i = f_{auth}(k_i, \, b, \, d_i) \qquad\qquad (2)$$

It is however noted that the MAC may be also computed further based on the address $a_i$ and/or without the nonce $b$, for example based on $m_i = f_{auth}(k_i, b, a_i, d_i)$.

The base station 120 may verify the authenticity of the MAC of a received packet, for example, based on the following pseudocode:

1: **procedure** AUTH ($[h_i, a_i, d_i, m_i]$)

2:          $k_i \leftarrow key\_lookup(a_i)$

3:          $m_i'' \leftarrow f_{auth}(k_i, \, b, \, a_i, d_i)$

4:          $valid \leftarrow compare(m_i'', m_i)$

5:          **return** $valid$

6: **end procedure**

The base station 120 may provide as an input to the above pseudocode the received data packet denoted by $[\hat{h}_i, \hat{a}_i, \hat{d}_i, \hat{m}_i]$. In response to receiving a data packet 300, the base station 120 may decode the received address field $\hat{a}_i$ indicating the $i$-th node. The base station 120 may determine the private key of the $i$-th node $k_i$ based on the indicated address $\hat{a}_i$. This may be done, for example, by retrieving the private key of the $i$-th node from a look-up table based on the received address field. The base station 120 may then compute a reference MAC $m_i''$ based on the determined private key of the i-th node and the received data $\hat{d}_i$, and optionally based on the decoded address field. For example, the reference MAC may be computed based on the private key of the $i$-th node and a concatenation of the received address field and the received data. Computing the reference MAC may be further based on the nonce $b$.

The base station 120 may compare the computed reference MAC to the received MAC $\hat{m}_i$. If the reference MAC is equal to the received MAC, the base station 120 may declare the node associated with the received address to be an authentic data source. For example, the base station 120 may set a Boolean value $valid = true$. The base station 120 may then return $valid = true$ as an output of the authentication procedure. If the computed reference MAC is not equal to the received MAC, the base station 120 may determine that the node associated with the received address is not an authentic data source. The base station 120 may then return a Boolean value $valid = false$.

FIG. 4 illustrates an example of a data packet 400 with a joint MAC and address field. The data packet 400 may comprise data fields $h_i$, $d_i$, and $m_i$ similar to data packet 300. However, the data packet 400 may not include the explicit address field $a_i$. Instead, the address of the transmitting node (i-th node), or in general an identifier of a data source, may be implicitly indicated in the MAC field $m_i$. The size of the data packet 400 $[h_i, d_i, m_i]$ may be hence equal to $H + D + M$. The node 110 may determine the MAC as described above, for example based on $m_i = f_{auth}(k_i, b, d_i)$ (cf. Equation (2)). Alternatively, the MAC may be determined further based on the address of the $i$-th node, for example based on $m_i = f_{auth}(k_i, b, a_i, d_i)$. It is further noted that the use of the nonce $b$ may be optional and therefore the MAC computation may be also performed based on $m_i = f_{auth}(k_i, d_i)$. Since the MAC is generated based on the private key of the i-th node, the MAC implicitly carries also information about the identity of the i-th node. The data packet 400 therefore provides a joint identification and authentication protocol. Instead of including the explicit address field in the data packet, the *i*-th node may be identified through the MAC, which is dependent on the private (unique) key of the *i*-th node.

A device, for example, node 110, may generate the data packet 400 without the explicit address field for example as follows. The device may first obtain payload data subject to transmission. The payload data may be associated with a data source. For example, the payload data may have been received from a particular data source or the device may itself act as the data source. The device may determine a MAC based on the payload data and a unique key of the data source, for example the private key. As discussed above, determining the MAC may be further based on a cryptographic nonce, which may be received prior to data transmission. The generated data packet 400 may comprise the payload data and the MAC, but the data packet 400 may not comprise the explicit address field.

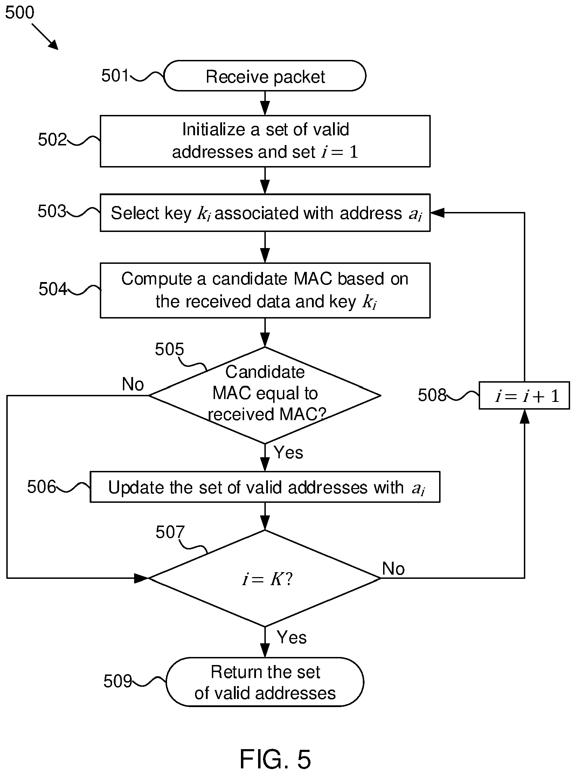

FIG. 5 illustrates an example of a procedure 500 for data source identification on a joint MAC and address field. This procedure may be performed at base station 120, as described below, but it may be alternatively performed by any device or application that authenticates data packets having a joint MAC and address field. The procedure 500 may be used to implement for example the following pseudocode:

1: **procedure** AUTH ($[h, d, m]$)

2:  $valid\_set \leftarrow \{\}$

3:  **for** $i \leftarrow 1, K$ **do**

4:   $k_i \leftarrow key\_lookup(a_i)$

5:   $m_i'' \leftarrow f_{auth}(k_i,\ b,\ a_i, d)$

6:   $valid \leftarrow compare(m_i'', m)$

7:   **if** $valid$ **then**

8:    $valid\_set \leftarrow valid\_set \cup a_i$

9:   **end if**

10:  **end for**

11:   **return** $valid\_set$

12: **end procedure**

At operation 501, the procedure 500 may be started at base station 120 by receiving the data packet 400. The received data fields of the data packet 400 are denoted by $[\hat{h}, \hat{d}, \hat{m}]$, and the data packet comprising these fields may be provided as an input to the above pseudocode.

At operation 502, the base station 120 may initialize a set of valid addresses. For example, the base station 120 may initialize an empty set of valid addresses (cf. line 2 of the above pseudocode). The base station 120 may further set a node index $i$ equal to 1.

At operation 503, the base station 120 may select key $k_i$ associated with address $a_i$ of the *i*-th node, which may be referred to as an *i*-th candidate node. For example, at the first iteration ($i$=1) the base station 120 may select key $k_1$ associated with address $a_1$ of the first candidate node. The key $k_i$ may be determined for example by retrieving a corresponding key from a look-up table based on address $a_i$ (cf. line 4). Key $k_i$ is an example of a unique key of a data source.

At operation 504, the base station 120 may compute an *i*-th candidate MAC $m_i''$ of the *i*-th candidate node based on the received payload data $\hat{d}$ and key $k_i$. As illustrated in the above pseudocode, determining the *i*-th candidate MAC may be further based on nonce $b$ and/or the *i*-th address $a_i$ and the received data $\hat{d}$ (cf. line 5).

At operation 505, the base station 120 may compare the i-th candidate MAC to the received MAC $\hat{m}$. The base station 120 may determine whether the candidate MAC is equal to the received MAC. The base station may set a value of Boolean parameter *valid* based on whether a match is detected between the i-the candidate MAC and the received MAC (cf. line 6). In response to detecting a match (*valid = true*), the base station 120 may move to operation 506 to update the set of valid addresses with the address of the *i*-th node (cf. line 8).

If no match is detected at 505, the base station 120 may set the parameter *valid* to value *false.* The base station 120 may further move to operation 507 to determine whether *i = K*, i.e., whether the *K* candidate nodes have been already processed. If *i < K,* the base station 120 may increase the value of the node index i by one at operation 508 and move 503 to continue with another iteration. As a result, a plurality of candidate MACs may be determined for a plurality of candidate nodes based on a corresponding plurality of unique keys of the nodes and the received payload data. If *i = K,* the base station 120 may return the set of valid addresses at 509.

As a summary, decoding the received data packet 400, $[\hat{h}, \hat{d}, \hat{m}]$, may comprise computing, for the plurality of *K* nodes, the candidate MACs $\mathcal{M} = \{\hat{m}_1, \hat{m}_2, ..., \hat{m}_K\}$ based on the unique keys $k_i$ of the nodes and the received payload data $\hat{d}$, optionally using the addresses of the nodes $a_i$, and/or a current nonce $b$. The candidate MACs may be computed for example based on:

$$\hat{m}_i = f_{auth}(k_i, b, \hat{d}), \qquad \text{where } i = 1, ..., K. \tag{3}$$

In order to identify the transmitting node, and thereby also authenticate the transmitting node and validate the integrity of the data packet 400, the base station 120 may compare each candidate MAC $\hat{m}_i$ to the MAC $\hat{m}$ contained in the received packet 400. If the codes match, the base station 120 may determine that the data packet 400 was correctly decoded and that it was transmitted by user $\hat{\imath}$, with $\hat{\imath}$ such that $m_{\hat{\imath}} = \hat{m}.$ The base station 120 may therefore determine an identifier of the transmitting node based on detecting the match. This also provides authentication of the transmitting node.

This scheme provides the advantage of avoiding the overhead caused by an explicit address field. Another benefit of not having the explicit address field in the data packet is that the data packets are independent and identically distributed across transmitting nodes, and thus the schemes from unsourced random access framework can be applied even though the data sources can in fact be identified.

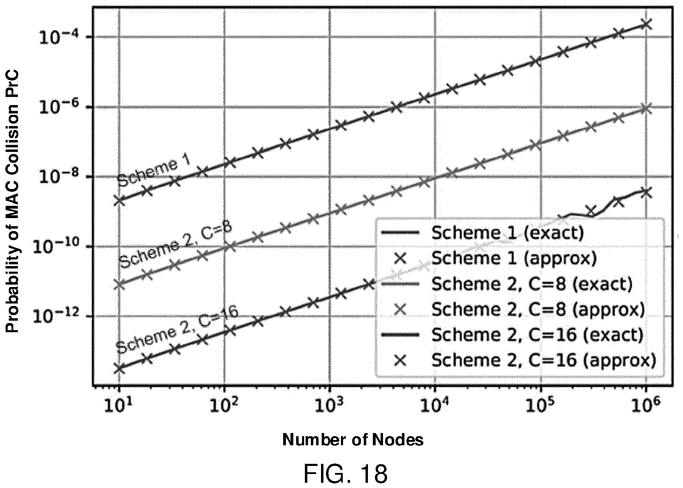

It is noted that, due to a non-zero hash collision probability, which will be further analyzed in relation to FIG. 18, it is possible that the returned set of valid addresses comprises more than one address. Even though in that occasion it is not possible to unambiguously determine the identity of the data source, the above procedure enables to detect such identification failures. Therefore, according to an embodiment, base station 120 may provide a declaration of identification success in response to determining that the cardinality of the set of valid addresses is equal to one, i.e., when the number of data sources or data source identifiers in the valid set is equal to one. An identification failure may be declared otherwise.

As discussed above, computing the MAC at the node 110 or the candidate MAC at the base station 120 may be done based on the address field or without the address field. Using the address field improves security. For example, assuming that an attacker knows of some key $k_i$, the attacker may create a valid MAC by $m_i = f_{auth}(k_i, b, d_i)$ and send the message $[h, d_i, m_i]$. Since there is no address included, the base station 120 goes through the list of keys and finds that the key $k_i$ is a match, since it produces a matching MAC $m_i$. Based on that the base station concludes that the message is valid and that it has been sent by a data source with address $a_i$. However, if the MAC computation is further based on the address $a_i$, the attacker would have to guess the address in order to perform a successful attack. Similar benefit may be achieved also when using the address field in computation of the MAC in other embodiments described herein.

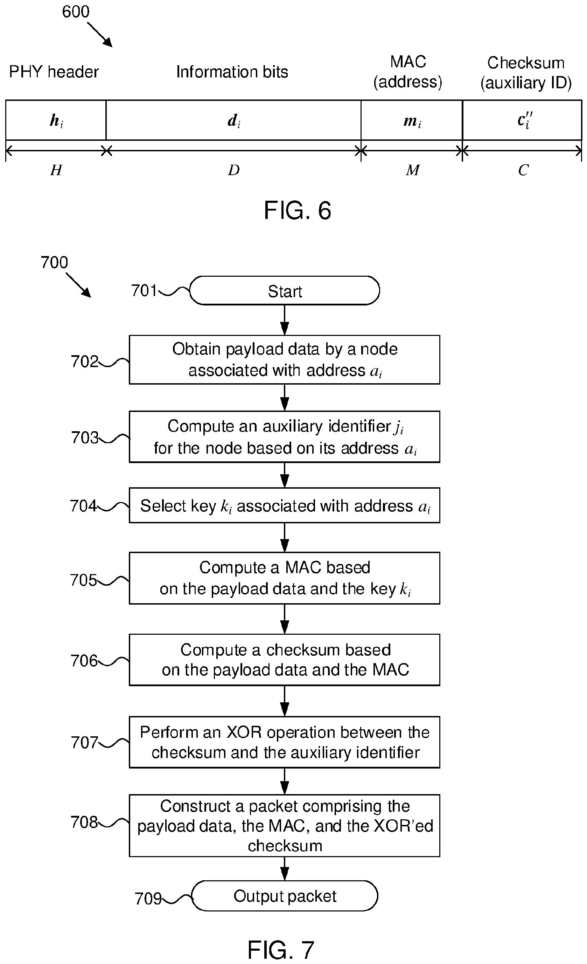

FIG. 6 illustrates an example of a data packet 600 with a joint MAC and address field and a checksum field. As will be further described below, the checksum field may be determined based on an (ambiguous) auxiliary identifier of the data source and therefore the checksum field may be used by a receiver to assist in identifying the data source. The data packet 600 may comprise data fields $h_i$, $d_i$, and $m_i$ similar to data packet 400. Similar to data packet 400, the data packet 600 may not include an explicit address identifier, or any other explicit identifier of a data source.

However, the data packet 600 may comprise a checksum field $c_i''$. The checksum field may be of size *C* (e.g. bits). The checksum field may be located at any suitable position within data packet 600, for example after the joint MAC and address field $m_i$, in the order of transmission. The data packet 600 may therefore comprise fields $[h_i, d_i, m_i, c_i'']$ and be of size *H + D + M + C*. The auxiliary identifier may be also called an auxiliary node identifier, an auxiliary data source identifier, a fixed-length identifier, a short digest, a digest, a short identifier, an ambiguous identifier, or a non-unique identifier.

FIG. 7 illustrates an example of a procedure for generating data packets with a joint MAC and address field and a checksum field. The procedure 700 may be performed by node 110, as described below, but it is understood that a similar procedure may be performed by any type of device or application that provides a packeting service for any data source. The procedure 700 may be used to generate the data packet 600 comprising the fields $h_i$, $d_i$, $m_i$ and $c_i''$.

At operation 701, the node 110 may start the procedure.

At operation 702, the node 110 may obtain payload data $d_i$. The payload data may be associated with address $a_i$ of the node 110 (*i*-th node), or in general payload data associated with a data source or an identifier of the data source. As discussed above, the node 110 may operate as a data source itself or it may generate data packets based on payload data received from one or more data sources. Obtaining the payload data may therefore comprise retrieving the payload data from a memory, from an internal data source of node 110 such as a component or an application of the node 110, or receiving the payload data over a communication interface from an external data source.

At operation 703, the node 110 may obtain an auxiliary identifier $j_i$ for the node based on its address $a_i$. The size of the auxiliary identifier $j_i$ may be smaller than a size of the address $a_i$. Hence, the auxiliary identifier $j_i$ may be ambiguous within the $K$ nodes unambiguously identifiable by the address. For example, some nodes may share the same auxiliary identifier $j_i$. The auxiliary identifier $j_i$ may be computed based on the address $a_i$, for example as a function $f_j$ of the address:

$$\mathbf{j}_i = f_j(\mathbf{a}_i) \tag{4}$$

The function $f_j(a_i)$ may or may not be a cryptographic function. For example, the function may comprise selecting a subset of bits of $a_i$, for example the $C$ less significant bits of $a_i$. The auxiliary identifier $j_i$ or the function for determining it based on the address, may be known to the base station 120. The auxiliary identifier $j_i$ may be static or semi-static and therefore it may not need to change between consecutive transmissions.

At operation 704, the node 110 may select a key $k_i$ based on address $a_i$, for example using a look-up table of addresses mapped to corresponding keys.

At operation 705, the node 110 may compute the MAC $m_i$ based on the payload data $d_i$, and the key $k_i$. Node 110 may be configured to compute the MAC further based on the nonce &, and/or the address $a_i$. The MAC may be therefore computed for example based on $m_i = f_{auth}(k_i, b, a_i, d_i)$.

At operation 706, the node 110 may compute a checksum $c_i'$ based on the payload data and the MAC computed at 704. The checksum $c_i'$ may be computed, for example, based on $c_i' = f_c([d_i, m_i])$, where $f_c(\cdot)$ may be any suitable faction for calculating a checksum and where [·] denotes concatenation. However, the computation of the checksum $c_i'$ may be additionally based on further data fields of the data packet 600, such as, for example, the header $h_i$.

At operation 707, the node 110 may perform an exclusive-or (XOR) operation for the checksum $c_i'$ with the auxiliary identifier $j_i$: $c_i'' = c_i' \oplus j_i$. The XOR operation may comprise a bit-wise XOR operation between the checksum $c_i'$ and the auxiliary identifier $j_i$. Hence, a second checksum $c_i''$ may be obtained by:

$$c_i' = f_c([d_i, m_i]) \quad \text{and} \quad c_i'' = c_i' \oplus j_i \tag{5}$$

The computation of the second checksum $c_i''$ may be therefore based on the payload data, the MAC, and the auxiliary identifier.

At operation 708, the node 110 may insert the resulting second (XOR'ed) checksum $c_i''$ in the data packet 600 to construct a data packet comprising the payload data, $d_i$, the MAC, $m_i$, and the second checksum $c_i''$.

At operation 709, the node 110 may output the data packet 600, for example for transmission to base station 120.

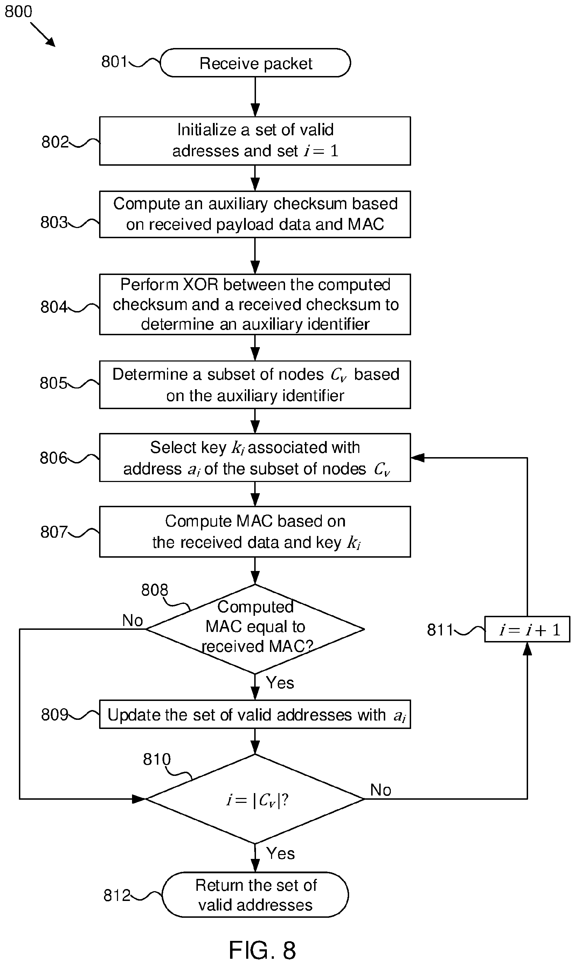

FIG. 8 illustrates an example of a procedure 800 for data source identification based on a joint MAC and address field and a checksum field. This procedure may be performed at base station 120, as described below, but it may be alternatively performed by any device or application that authenticates data packets having a joint MAC and address field and a checksum field. The procedure 800 may be used to implement, for example, the following pseudocode:

```
1: procedure AUTH ([h, d, m, c″])
2:              valid_set ← { }

3:              c′ ← f_c([d, m])
4:              j ← c″ ⊕ c′
5:              C_v ← hash_list_lookup(j)
3:              for i ← 1, |C_v| do
4:                     k_i ← key_lookup(a_i)
5:                     m″_i ← f_auth(k_i, b, a_i, d)
6:                     valid ← compare(m″_i, m)
7:                     if valid then
8:                            valid_set ← valid_set ∪ a_i
9:                     end if
10:             end for
11:             return valid_set
12: end procedure
```

At operation 801, the procedure 800 may be started at base station 120 by receiving the data packet 600. The received data fields of the data packet 600 are denoted by $[\hat{h}, \hat{d}, \hat{m}, \hat{c}'']$. These data fields may be provided as an input to the above pseudocode.

At operation 802, the base station 120 may initiate a set of valid addresses, similar to operation 502.

At operation 803, the base station 120 may compute a checksum $\hat{c}'$ (auxiliary checksum) based on the received payload data $\hat{d}$, and the received MAC $\hat{m}$,, for example based on the same checksum function $f_c(\cdot)$ used for generating the data packet 600:

$$\hat{c}' = f_c([\hat{d}, \hat{m}]).\qquad(6)$$

At operation 804, the base station 120 may perform an XOR operation between the checksum $\hat{c}''$ received in the data packet and the computed auxiliary checksum $\hat{c}'$, to obtain an estimate of the auxiliary identifier $\mathbf{j}_i$. The auxiliary identifier may be therefore estimated based on:

$$\hat{c}' \oplus \hat{c}'' = \hat{j}_i\qquad(7)$$

At operation 805, the base station 120 may determine a subset of nodes $C_v$ based on the auxiliary identifier. For example, the base station 120 may select the subset of nodes $C_v$ from the plurality of $K$ nodes of the system such that the subset of nodes $C_v$ includes only nodes associated with the determined auxiliary identifier. The determined subset may be then used as a set of candidate nodes for searching for a match for the received MAC $\hat{m}$.

At operation 806, the base station 120 may select key $k_i$ associated with address $a_i$ of the $i$-th node of the subset of nodes. The $i$-th node of the subset may be again referred to as an i-th candidate node.

At operation 807, the base station 120 may compute an i-th candidate MAC $m''_i$ of the $i$-th candidate node, similar to operation 504.

At operation 808, the base station 120 may compare the i-th candidate MAC to the received MAC similar to operation 505, and move to operation 808 to update the set of valid addresses with the address of the i-th node in response to detecting a match (*valid = true*). If no match is detected at 808 (*valid = false*), the base station 120 may move to operation 810 to determine whether i = $|C_v|$, where $|C_v|$ denotes the cardinality of the subset of nodes $C_v$, i.e. the number of nodes in the subset. Hence, at 810, the base station 120 may determine whether the $|C_v|$ candidate nodes have been already processed. If $i < |C_v|$ the base station 120 may increase the value of the node index i by one at operation 811 and move to 806 to initiate another iteration for the next node within the subset of nodes. As a result, a plurality of candidate MACs may be determined for a subset of a plurality of nodes based on a corresponding plurality of node specific keys and the received payload data. In this embodiment, the base station 120 may therefore consider the subset of nodes as a plurality of candidate nodes. If $i = |C_v|$, the base station 120 may return the set of valid addresses at 509.

In general, decoding the received data packet 600 [$\hat{h}$, $\hat{d}$, $\hat{m}$, $\hat{c}$"] may comprise determining the subset of nodes $C_v$, based on the checksum field $\hat{c}$", and computing, for the $|C_v|$ nodes of the subset, the candidate MACs $\mathcal{M}$ = {$\hat{m}_1$, $\hat{m}_2$, ..., $\hat{m}|_{C_v}|$}), based on the received payload data $\hat{d}$, optionally using the current nonce $b$, and/or the address $a_i$. For example, based on

$$\hat{m}_i = f_{auth}(k_i, b, \hat{d}), \qquad i = 1, ..., |C_v|. \tag{8}$$

In order to identify the transmitting node, and thereby also to authenticate the transmitting node and validate the integrity of the data packet 600, the base station 120 may compare each computed candidate MAC $\hat{m}_i$ to the MAC $\hat{m}$ contained in the received packet 600. If the codes match, the base station 120 may determine that the message is correctly decoded and that it was transmitted by node $\hat{i}$, with $\hat{i}$ such that $\hat{m}_{\hat{i}} = \hat{m}$. The base station 120 may therefore determine an identifier of the node based on detecting the match. This also provides authentication of the node. This procedure provides similar benefits as procedure 500 of FIG. 5. However, since the checksum field enables to reduce the number of candidate nodes, the complexity at the base station 120 is reduced. Furthermore, the hash collision probability is reduced, as will be further described below.

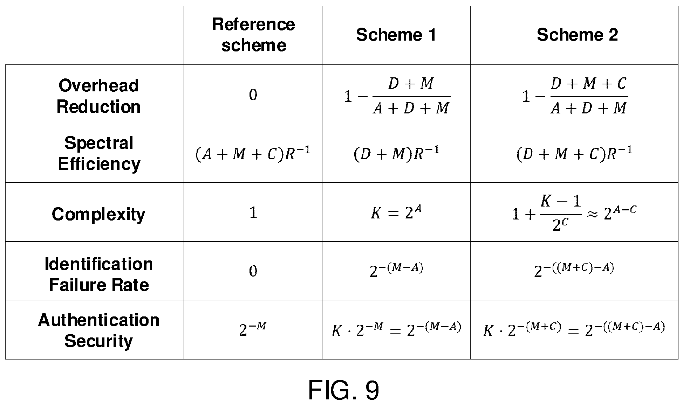

FIGs. 9 to 18 illustrate performance of different data packet identification and authentication schemes. In the following, the data packet identification and authentication scheme based on a data packet 300 comprising an explicit address identifier is referred to as the Reference scheme. Procedure 500, which is based on data packet 400 comprising the joint MAC and address field is referred to as Scheme 1. Procedure 700, which is based on data packet 600 comprising the joint MAC and address field and the checksum field is referred to as Scheme 2.

Radio access may implemented in three steps: (i) Contention-based random access in the uplink, (ii) broadcast of a scheduling decision in the downlink, and (iii) contention-free uplink data transmission. Since phases (i) and (ii) may not use any user identification, they are not considered in the analysis, and the focus is therefore in phase (iii). Furthermore, since the header may be in many cases encoded separately from the payload data, it provides a constant contribution to the spectral efficiency and is therefore omitted in the analysis. Unless otherwise specified, the sizes of the packet elements are equal to A=32 (in the Reference scheme only), M=32, and C=16 (in Scheme 2).

FIG. 9 illustrates performance analysis results for different data source identification and authentication schemes. The rows of the table indicate the overhead reduction as an overhead reduction percentage, the spectral efficiency as the number of channel uses, the complexity as the number of MAC computations, the identification failure rate as the hash collision probability and the authentication security as the MAC attack probability, as will be further described in relation to the following figures.

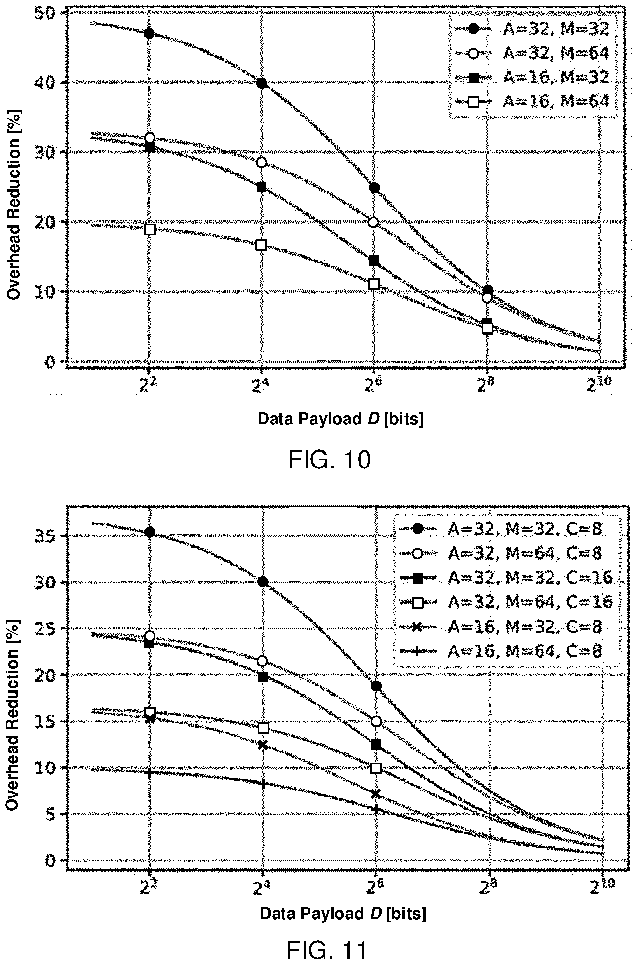

FIG. 10 illustrates an example of overhead reduction for a data source identification and authentication scheme based on a joint MAC and address field (Scheme 1). The reduction in the data packet size (in bits) for Scheme 1 compared to the data packet of the Reference scheme is given by:

$$\text{Reduction}_1 = 1 - \frac{D + M}{A + D + M} \tag{8}$$

where the denominator $A + D + M$ is the size of data packet 300 and the numerator $D + M$ is the size of data packet 400 (without headers). The overhead reduction has been plotted for different combinations of address field size $A$, and data field size $D$. It can be observed that, for small data payloads, which is expected in unsourced random access systems, Scheme 1 provides a substantial overhead reduction.

FIG. 11 illustrates an example of overhead reduction for a data source identification and authentication scheme based on a joint MAC and address field and a checksum field (Scheme 2). The reduction in the data packet size (in bits) for Scheme 2 compared to the data packet of the Reference scheme is given by

$$Reduction_2 = 1 - \frac{D + M + C}{A + D + M} \qquad (9)$$

where the numerator $D + M + C$ is now the size of data packet 600 (without the header). The overhead reduction has been plotted for different combinations of address field size A, payload data field size $D$, and checksum field size $C$. It can be observed that Scheme 2 provides a substantial overhead reduction for small data payloads as well. However, the overhead reduction is slightly lower due to the bits allocated to the checksum field.

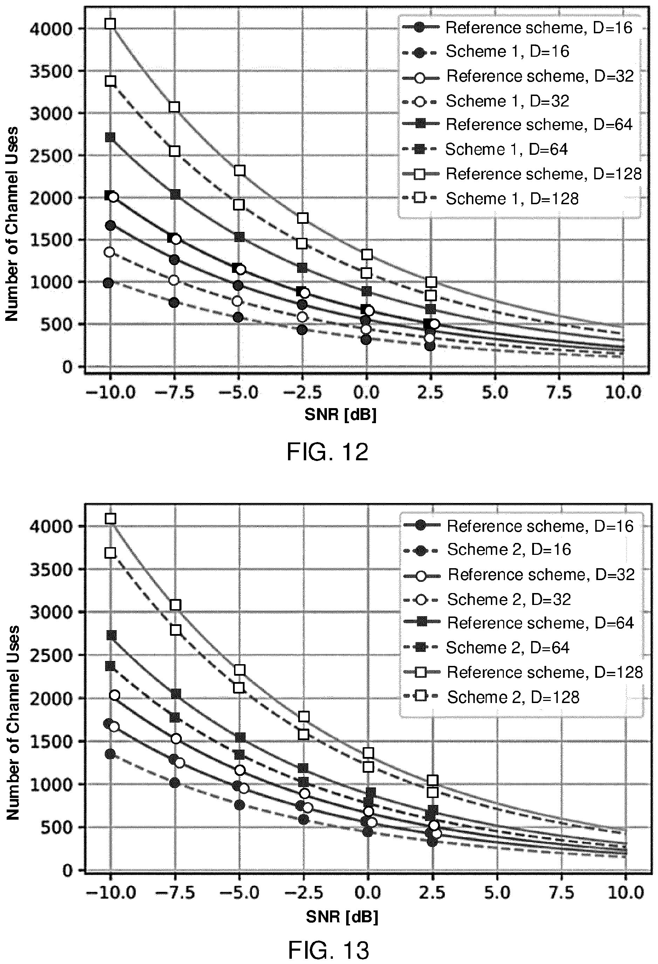

FIG. 12 illustrates an example of spectral efficiency for a reference scheme and a data source identification and authentication scheme based on a joint MAC and address field (Scheme 1). The spectral efficiency is characterized by considering the number of channel uses required to provide a fixed reliability target of $\varepsilon = 10^{-1}$ in a point-to-point scenario, which may be used as a basis for estimating performance for unsourced random access schemes. A Rayleigh block-fading channel with an average channel gain of 1 is assumed so that the required rate can be calculated as:

$$R = \log_2(1 - \ln(1 - \epsilon)\,SNR) = \frac{\text{Number of Bits (Packet Size)}}{N} \qquad (10)$$

where SNR denotes the signal-to-noise ratio and $N$ denotes the number of channel uses. The number of channel uses $N_{\text{ref}}$ and $N_1$ for the Reference scheme and Scheme 1 are:

$$N_{\text{ref}} = (A + D + M)R^{-1} \qquad (11)$$

$$N_1 = (D + M)R^{-1} \qquad (12)$$

It can be observed that, at low SNRs, as expected in case of unsourced random access, Scheme 1 requires a significantly smaller number of channel uses compared to the Reference scheme with different sizes of payload data $D$.

FIG. 13 illustrates an example of spectral efficiency for a reference scheme and a data source identification and authentication scheme based on a joint MAC and address field and a checksum field (Scheme 2). Under the above assumptions, the number of channel uses $N_2$ for Scheme 2 is:

$$N_2 = (D + M + C)R^{-1} \qquad (13)$$

It can be observed that, at low SNR, also Scheme 2 requires a smaller number of channel uses compared to the reference scheme with different sizes of payload data $D$.

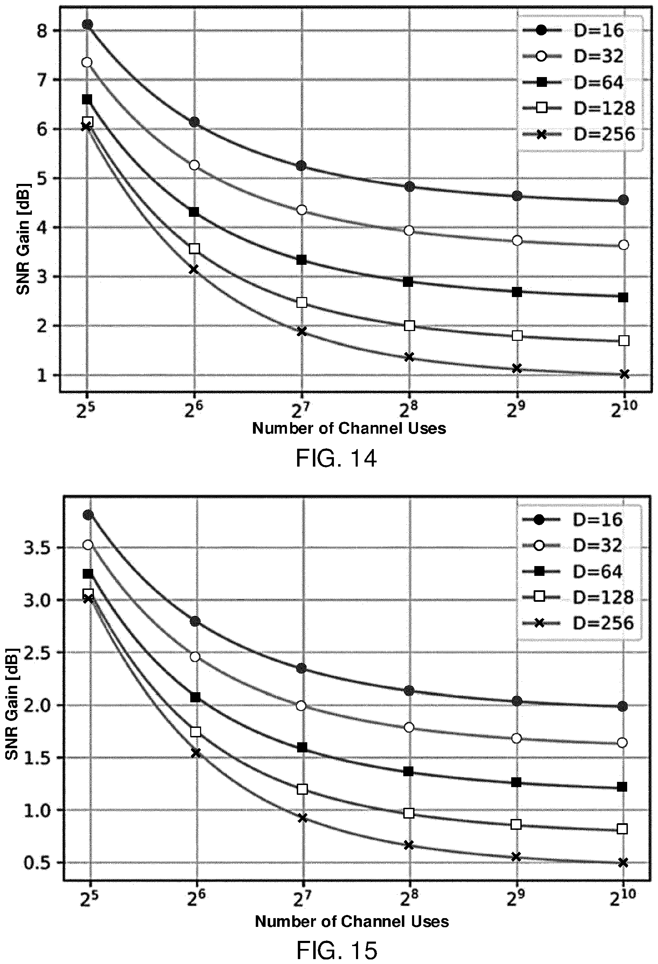

FIG. 14 illustrates an example of signal-to-noise ratio (SNR) gain for a data source identification and authentication scheme based on a joint MAC and address field. The gain provided by the disclosed data packets may be also expressed as an equivalent increase in the SNR. Specifically, for a fixed number of channel uses $N$, a fixed data size $D$, and a fixed reliability target of $\varepsilon = 10^{-1}$, the SNR gain for Scheme 1 is given by:

$$SNR\,Gain_1 = \frac{2^{R_{\text{ref}}} - 1}{2^{R_1} - 1} = \frac{2^{(A+M+C)/N} - 1}{2^{(D+M)/N} - 1} \qquad (14)$$

The SNR gain has been plotted for different payload data sizes $D$, up to $D = 256$. It can be observed that Scheme 1 provides a significant SNR gain over the Reference scheme for a fixed reliability target. This SNR gain is particularly high for the small data payloads, as expected in unsourced random access schemes.

FIG. 15 illustrates an example of signal-to-noise ratio (SNR) gain for a data source identification and authentication scheme based on a joint MAC and address field and a checksum field (Scheme 2). Under similar assumptions, the SNR gain for Scheme 2 is given by:

$$SNR\,Gain_2 = \frac{2^{R_{\text{ref}}} - 1}{2^{R_2} - 1} = \frac{2^{(A+M+C)/N} - 1}{2^{(D+M+C)/N} - 1}. \qquad (15)$$

The SNR gain has been plotted again for different payload data sizes $D$, up to $D = 256$. It can be observed that also Scheme 2 provides a significant SNR gain over the Reference scheme for a fixed reliability target. Again, the SNR gain is higher for the small data payloads, which is beneficial in case of unsourced random access schemes.

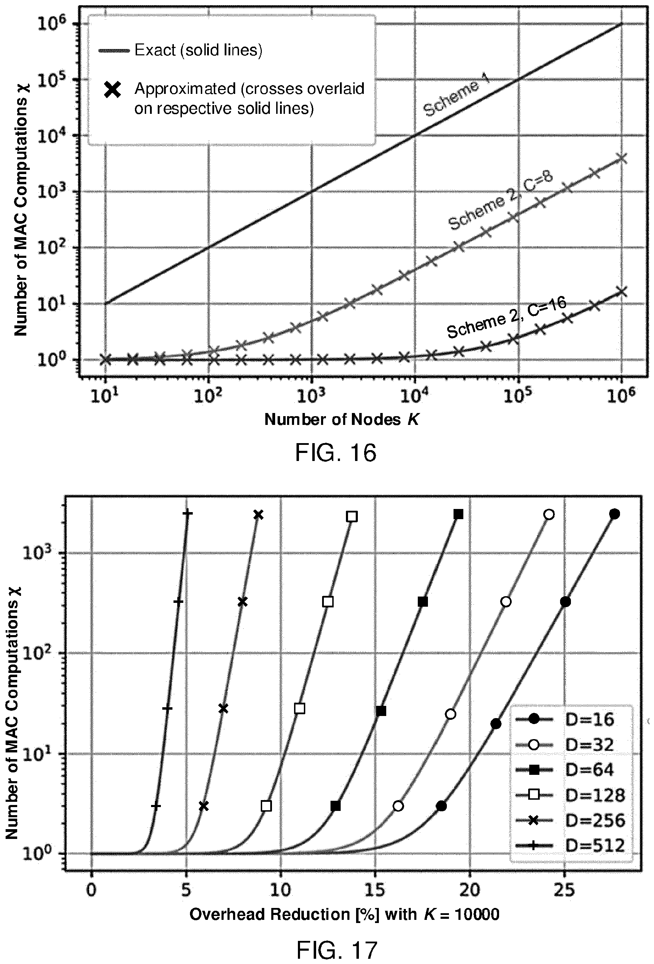

FIG. 16 illustrates examples of complexities of data source identification and authentication schemes based on a joint MAC and address field, with and without a checksum field. A precise comparison of the complexities of the different schemes is not straightforward. However, the disclosed methods use only few different operations such as: XORs, comparisons (simple bitwise operation), table lookups (fast on sorted lists), CRC (cyclic redundancy check) computation and MAC computations. Out of those, the MAC computation may be the most complex operation. Hence, focusing solely on the number of MAC computations provides a relatively good indication of the overall complexity.

FIG. 16 provides both the exact complexities (solid lines) as well as the approximated complexities (crosses overlaid on respective solid lines).

In the reference scheme, users may be identified by their addresses, and, hence, only one MAC address needs to be computed. The complexity for the reference scheme complexity is therefore

$$\chi_{\mathrm{ref}} = 1 \qquad (16)$$

The worst case scenario, where the total populations of nodes is $K = 2^A$, is assumed for estimating the complexity for Schemes 1 and 2. Under Scheme 1, the base station 120 may compare the MAC for the K potential users and, hence, the number of MAC computations is

$$\chi_1 = K = 2^A. \qquad (17)$$

In Scheme 2, the auxiliary identifier $j$ has $C$ bits, and hence the probability of having any particular one is $1/2^C$. From the perspective of an arbitrary node, the probability that $\ell$ among the remaining $K - 1$ nodes have the same auxiliary identifier is given by the binomial distribution. Then, the average number of MAC computations for Scheme 2 is:

$$\chi_2 = \sum_{\ell=0}^{K-1} \binom{K-1}{\ell} \left(\frac{1}{2^C}\right)^{\ell} \left(1 - \frac{1}{2^C}\right)^{K-1-\ell} (\ell + 1) \approx 1 + \frac{K-1}{2^C} \approx 2^{A-C}. \qquad (18)$$

The number of operations for Schemes 1 and 2 has been plotted as a function of the total number of nodes $K$. It is observed that the complexity of Scheme 1 scales linearly with the number of nodes $K$. In contrast, Scheme 2 reduces the complexity of Scheme 1 by a factor of $2^C$.

FIG. 17 illustrates an example of complexity with respect to overhead reduction for a data source identification and authentication scheme based on a joint MAC and address field and a checksum field (Scheme 2). Based on the above calculations, the number of MAC computations has been plotted with respect to the overhead reduction percentage for different sizes of the payload data $D$, and with the total number of users being equal to $K = 1000$. It is observed that the resulting complexity is manageable even for high overhead reductions.

FIG. 18 illustrates an example of MAC collision probability with respect to a number of nodes for data source identification and authentication schemes based on a joint MAC and address field, with and without a checksum field.

According to embodiments of the present disclosure, the base station 120 may determine the identity of the node 110 by checking which key produces the matching MAC, and hence it is possible that ambiguity occurs. In other words, it may happen that for a particular message $\mathbf{m}_i$ and nonce $\mathbf{b}$, there exists $\mathbf{a}_j \neq \mathbf{a}_i$ such that:

$$\mathbf{m}_i = f_{auth}(\mathbf{k}_i, \mathbf{b}, \mathbf{d}_i) = f_{auth}(\mathbf{k}_j, \mathbf{b}, \mathbf{d}_j) = \mathbf{m}_j. \qquad (19)$$

As discussed above, identification success may be declared when equation (19) does not occur, that is, when there is exactly one matching MAC-key pair, corresponding to the originator of the message. Assuming that the MACs produced by the hashing function $f_{auth}(\cdot)$ are uniformly distributed, the following analysis holds: For Scheme 1, the identification success occurs when all the other $K - 1$ keys produce a MAC which is different from the received MAC $\mathbf{m}_i$. The probability of the collision, i.e., the probability of an identification failure, is therefore:

$$\mathrm{PrC}_1 = 1 - \left(1 - \frac{1}{2^M}\right)^{K-1} \approx \frac{K-1}{2^M} \approx 2^{-(M-A)} \qquad (20)$$

For Scheme 2, the auxiliary identifier restricts the number of potentially colliding devices, and hence the probability of collision is:

$$\mathrm{PrC}_2 = \sum_{\ell=0}^{K-1} \binom{K-1}{\ell} \left(\frac{1}{2^C}\right)^{\ell} \left(1-\frac{1}{2^C}\right)^{K-1-\ell} \left(1-\frac{1}{2^M}\right)^{\ell} \approx 1 - \left(1-\frac{1}{2^M}\right)^{\frac{K-1}{2^C}} \approx \frac{K-1}{2^{M+C}} \approx 2^{-(M+C-A)} \qquad (21)$$

Both exact and approximated collision probabilities have been plotted. It is observed that besides reducing complexity, Scheme 2 also provides a reduced probability of identification failure. This highlights the benefit of the hierarchical decoding included in the procedure 800, since a corresponding increase in the length of the MAC in Scheme 1 to have the same identification failure as with Scheme 2, would not reduce the decoding complexity.

Since the disclosed protocols do not alter the encryption scheme, the level of confidentiality may be maintained. However, the decoding procedure of the disclosed protocols changes the authenticity of the protocol. For example, an attacker may construct a random packet (or is able to alter the bits in a packet transmitted by a user). Since the data is assumed to be encrypted, the attacker is not able to extract or inject specific information into the data. However, the attacker may "hope" that the constructed packet has a valid MAC for some of the users. This may lead to the situation in which the receiver erroneously believes that the packet is authentic. In the reference scheme, the probability that the attacker constructs a valid MAC is $1/2^M$.

On the other hand, under the disclosed protocol with Scheme 1, a MAC is declared valid if it coincides with the MAC obtained from any of the user's keys, which happens approximately with probability $K/2^M$. Even when $K$ is much smaller than $2^M$, this probability cannot be neglected. As an example, suppose $K = 10^5$ and $M = 32$, the probability that the attacker guesses correctly is in the order of $10^{-5}$, which means that an attacker would have to send a large number of packets to perform a successful attack. Under Scheme 2, the CRC decreases the attack success probability by a factor of $2^C$. In particular, if $C = \log_2 K$, then the scheme provides the same level of security as the reference scheme.

Although authentication may be desired in many applications, there may be situations in which it is less important, e.g., because additional authenticity can be obtained using non-cryptographic methods. This may for instance be the case in a control system, where the transmitted data represent sensor readings that can be expected to follow some predictable process. Since the protocol still provides confidentiality, an application-level error detection mechanism may be applied to provide additional confidentiality. Another scenario could be that the transmitter has access to a more secure side-channel that it can use occasionally to batch-verify the packets transmitted over the primary channel.

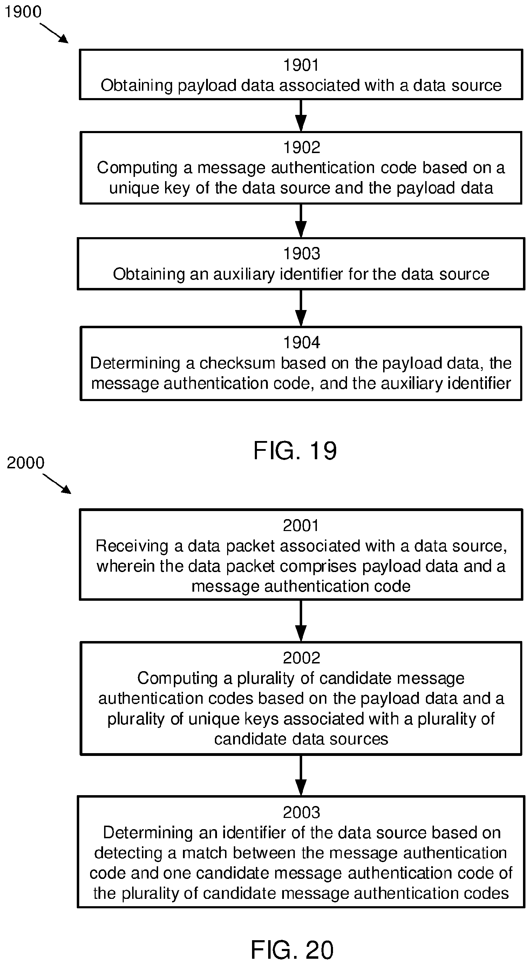

FIG. 19 illustrates an example of a method 1900 for generating authenticated data packets.

At 1901, the method may comprise obtaining payload data associated with a data source.

At 1902, the method may comprise computing a message authentication code based on a unique key of the data source and the payload data.

At 1903, the method may comprise obtaining an auxiliary identifier for the data source. A size of the auxiliary identifier may be smaller than a size of an identifier of the data source.

At 1904, the method may comprise determining a checksum based on the payload data, the message authentication code, and the auxiliary identifier.

FIG. 20 illustrates an example of a method 2000 for authenticating data packets.

At 2001, the method may comprise receiving a data packet associated with a data source, wherein the data packet comprises payload data and a message authentication code.

At 2002, the method may comprise computing a plurality of candidate message authentication codes based on the payload data and a plurality of unique keys associated with a plurality of candidate data sources.

At 2003, the method may comprise determining an identifier of the data source based on detecting a match between the message authentication code and one candidate message authentication code of the plurality of candidate message authentication codes.

Further features of the methods directly result from the functionalities and parameters of the methods and devices, for example node 110 or base station 120, as described in the appended claims and throughout the specification and are therefore not repeated here.

A device or a system may be configured to perform or cause performance of any aspect of the method(s) described herein. Further, a computer program may comprise program code configured to cause performance of an aspect of the method(s) described herein, when the computer program is executed on a computer. Further, the computer program product may comprise a computer readable storage medium storing program code thereon, the program code comprising instruction for performing any aspect of the method(s) described herein. Further, a device may comprise means for performing any aspect of the method(s) described herein. According to an example embodiment, the means comprises at least one processor, and at least one memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. Furthermore, references to 'at least one' item or 'one or more' items may refer to one or a plurality of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought. The term 'comprising' is used herein to mean including the method, blocks, or elements identified, but that such blocks or elements do not comprise an exclusive list and a method or device may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification. station 120 is reduced. Furthermore, the hash collision probability is reduced, as will be further described below.

FIGs. 9 to 18 illustrate performance of different data packet identification and authentication schemes. In the following, the data packet identification and authentication scheme based on a data packet 300 comprising an explicit address identifier is referred to as the Reference scheme. Procedure 500, which is based on data packet 400 comprising the joint MAC and address field is referred to as Scheme 1. Procedure 700, which is based on data packet 600 comprising the joint MAC and address field and the checksum field is referred to as Scheme 2.

Radio access may implemented in three steps: (i) Contention-based random access in the uplink, (ii) broadcast of a scheduling decision in the downlink, and (iii) contention-free uplink data transmission. Since phases (i) and (ii) may not use any user identification, they are not considered in the analysis, and the focus is therefore in phase (iii). Furthermore, since the header may be in many cases encoded separately from the payload data, it provides a constant contribution to the spectral efficiency and is therefore omitted in the analysis. Unless otherwise specified, the sizes of the packet elements are equal to A=32 (in the Reference scheme only), M=32, and C=16 (in Scheme 2).

FIG. 9 illustrates performance analysis results for different data source identification and authentication schemes. The rows of the table indicate the overhead reduction as an overhead reduction percentage, the spectral efficiency as the number of channel uses, the complexity as the number of MAC computations, the identification failure rate as the hash collision probability and the authentication security as the MAC attack probability, as will be further described in relation to the following figures.

FIG. 10 illustrates an example of overhead reduction for a data source identification and authentication scheme based on a joint MAC and address field (Scheme 1). The reduction in the data packet size (in bits) for Scheme 1 compared to the data packet of the Reference scheme is given by:

$$\text{Reduction}_1 = 1 - \frac{D + M}{A + D + M} \qquad (8)$$

where the denominator $A + D + M$ is the size of data packet 300 and the numerator $D + M$ is the size of data packet 400 (without headers). The overhead reduction has been plotted for different combinations of address field size $A$, and data field size $D$. It can be observed that, for small data payloads, which is expected in unsourced random access systems, Scheme 1 provides a substantial overhead reduction.

FIG. 11 illustrates an example of overhead reduction for a data source identification and authentication scheme based on a joint MAC and address field and a checksum field (Scheme 2). The reduction in the data packet size (in bits) for Scheme 2 compared to the data packet of the Reference scheme is given by

$$\text{Reduction}_2 = 1 - \frac{D + M + C}{A + D + M} \qquad (9)$$

where the numerator $D + M + C$ is now the size of data packet 600 (without the header). The overhead reduction has been plotted for different combinations of address field size $A$, payload data field size $D$, and checksum field size $C$. It can be observed that Scheme 2 provides a substantial overhead reduction for small data payloads as well. However, the overhead reduction is slightly lower due to the bits allocated to the checksum field.

FIG. 12 illustrates an example of spectral efficiency for a reference scheme and a data source identification and authentication scheme based on a joint MAC and address field (Scheme 1).

The spectral efficiency is characterized by considering the number of channel uses required to provide a fixed reliability target of $\varepsilon = 10^{-1}$ in a point-to-point scenario, which may be used as a basis for estimating performance for unsourced random access schemes. A Rayleigh block-fading channel with an average channel gain of 1 is assumed so that the required rate can be calculated as:

$$R = \log_2(1 - \ln(1 - \epsilon)\, \text{SNR}) = \frac{\text{Number of Bits (Packet Size)}}{N} \qquad (10)$$

where SNR denotes the signal-to-noise ratio and N denotes the number of channel uses. The number of channel uses $N_{\text{ref}}$ and $N_1$ for the Reference scheme and Scheme 1 are:

$$N_{\text{ref}} = (A + D + M)R^{-1} \qquad (11)$$

$$N_1 = (D + M)R^{-1} \qquad (12)$$

It can be observed that, at low SNRs, as expected in case of unsourced random access, Scheme 1 requires a significantly smaller number of channel uses compared to the Reference scheme with different sizes of payload data $D$.

FIG. 13 illustrates an example of spectral efficiency for a reference scheme and a data source identification and authentication scheme based on a joint MAC and address field and a checksum field (Scheme 2). Under the above assumptions, the number of channel uses $N_2$ for Scheme 2 is:

$$N_2 = (D + M + C)R^{-1} \qquad (13)$$

It can be observed that, at low SNR, also Scheme 2 requires a smaller number of channel uses compared to the reference scheme with different sizes of payload data $D$.

FIG. 14 illustrates an example of signal-to-noise ratio (SNR) gain for a data source identification and authentication scheme based on a joint MAC and address field. The gain provided by the disclosed data packets may be also expressed as an equivalent increase in the SNR. Specifically, for a fixed number of channel uses $N$, a fixed data size $D$, and a fixed reliability target of $\varepsilon = 10^{-1}$, the SNR gain for Scheme 1 is given by:

$$\text{SNR Gain}_1 = \frac{2^{R_{\text{ref}}} - 1}{2^{R_1} - 1} = \frac{2^{(A+M+C)/N} - 1}{2^{(D+M)/N} - 1} \qquad (14)$$

The SNR gain has been plotted for different payload data sizes $D$, up to $D = 256$. It can be observed that Scheme 1 provides a significant SNR gain over the Reference scheme for a fixed reliability target. This SNR gain is particularly high for the small data payloads, as expected in unsourced random access schemes.

FIG. 15 illustrates an example of signal-to-noise ratio (SNR) gain for a data source identification and authentication scheme based on a joint MAC and address field and a checksum field (Scheme 2). Under similar assumptions, the SNR gain for Scheme 2 is given by:

$$\text{SNR Gain}_2 = \frac{2^{R_{\text{ref}}} - 1}{2^{R_2} - 1} = \frac{2^{(A+M+C)/N} - 1}{2^{(D+M+C)/N} - 1}. \qquad (15)$$

The SNR gain has been plotted again for different payload data sizes $D$, up to $D = 256$. It can be observed that also Scheme 2 provides a significant SNR gain over the Reference scheme for a fixed reliability target. Again, the SNR gain is higher for the small data payloads, which is beneficial in case of unsourced random access schemes.

FIG. 16 illustrates examples of complexities of data source identification and authentication schemes based on a joint MAC and address field, with and without a checksum field. A precise comparison of the complexities of the different schemes is not straightforward. However, the disclosed methods use only few different operations such as: XORs, comparisons (simple bitwise operation), table lookups (fast on sorted lists), CRC (cyclic redundancy check) computation and MAC computations. Out of those, the MAC computation may be the most complex operation. Hence, focusing solely on the number of MAC computations provides a relatively good indication of the overall complexity. FIG. 16 provides both the exact complexities (solid lines) as well as the approximated complexities (crosses overlaid on respective solid lines).

In the reference scheme, users may be identified by their addresses, and, hence, only one MAC address needs to be computed. The complexity for the reference scheme complexity is therefore

$$\chi_{\text{ref}} = 1 \qquad (16)$$

The worst case scenario, where the total populations of nodes is $K = 2^A$, is assumed for estimating the complexity for Schemes 1 and 2. Under Scheme 1, the base station 120 may compare the MAC for the K potential users and, hence, the number of MAC computations is

$$\chi_1 = K = 2^A. \qquad (17)$$

In Scheme 2, the auxiliary identifier $j$ has C bits, and hence the probability of having any particular one is $1/2^C$. From the perspective of an arbitrary node, the probability that $\ell$ among the remaining $K - 1$ nodes have the same auxiliary identifier is given by the binomial distribution. Then, the average number of MAC computations for Scheme 2 is:

$$\chi_2 = \sum_{\ell=0}^{K-1} \binom{K-1}{\ell} \left(\frac{1}{2^C}\right)^\ell \left(1 - \frac{1}{2^C}\right)^{K-1-\ell} (\ell + 1) \approx 1 + \frac{K-1}{2^C} \approx 2^{A-C}. \qquad (18)$$

The number of operations for Schemes 1 and 2 has been plotted as a function of the total number of nodes K. It is observed that the complexity of Scheme 1 scales linearly with the number of nodes K. In contrast, Scheme 2 reduces the complexity of Scheme 1 by a factor of $2^C$.

FIG. 17 illustrates an example of complexity with respect to overhead reduction for a data source identification and authentication scheme based on a joint MAC and address field and a checksum field (Scheme 2). Based on the above calculations, the number of MAC computations has been plotted with respect to the overhead reduction percentage for different sizes of the payload data $D$, and with the total number of users being equal to $K = 1000$. It is observed that the resulting complexity is manageable even for high overhead reductions.

FIG. 18 illustrates an example of MAC collision probability with respect to a number of nodes for data source identification and authentication schemes based on a joint MAC and address field, with and without a checksum field. According to embodiments of the present disclosure, the base station 120 may determine the identity of the node 110 by checking which key produces the matching MAC, and hence it is possible that ambiguity occurs. In other words, it may happen that for a particular message $\mathbf{m}_i$ and nonce $\mathbf{b}$, there exists $\mathbf{a}_j \neq \mathbf{a}_i$ such that:

$$\mathbf{m}_i = f_{auth}\left(\mathbf{k}_i, \mathbf{b}, \mathbf{d}_i\right) = f_{auth}\left(\mathbf{k}_j, \mathbf{b}, \mathbf{d}_j\right) = \mathbf{m}_j. \qquad (19)$$

As discussed above, identification success may be declared when equation (19) does not occur, that is, when there is exactly one matching MAC-key pair, corresponding to the originator of the message. Assuming that the MACs produced by the hashing function $f_{auth}(\cdot)$ are uniformly distributed, the following analysis holds: For Scheme 1, the identification success occurs when all the other $K - 1$ keys produce a MAC which is different from the received MAC $\mathbf{m}_i$. The probability of the collision, i.e., the probability of an identification failure, is therefore:

$$\text{PrC}_1 = 1 - \left(1 - \frac{1}{2^M}\right)^{K-1} \approx \frac{K-1}{2^M} \approx 2^{-(M-A)} \qquad (20)$$

For Scheme 2, the auxiliary identifier restricts the number of potentially colliding devices, and hence the probability of collision is:

$$\mathrm{PrC}_2 = \sum_{\ell=0}^{K-1} \binom{K-1}{\ell}\left(\frac{1}{2^C}\right)^\ell \left(1-\frac{1}{2^C}\right)^{K-1-\ell} \left(1-\frac{1}{2^M}\right)^\ell \approx 1 - \left(1-\frac{1}{2^M}\right)^{\frac{K-1}{2^C}}$$

$$\approx \frac{K-1}{2^{M+C}} \approx 2^{-(M+C-A)} \tag{21}$$

Both exact and approximated collision probabilities have been plotted. It is observed that besides reducing complexity, Scheme 2 also provides a reduced probability of identification failure. This highlights the benefit of the hierarchical decoding included in the procedure 800, since a corresponding increase in the length of the MAC in Scheme 1 to have the same identification failure as with Scheme 2, would not reduce the decoding complexity.

Since the disclosed protocols do not alter the encryption scheme, the level of confidentiality may be maintained. However, the decoding procedure of the disclosed protocols changes the authenticity of the protocol. For example, an attacker may construct a random packet (or is able to alter the bits in a packet transmitted by a user). Since the data is assumed to be encrypted, the attacker is not able to extract or inject specific information into the data. However, the attacker may "hope" that the constructed packet has a valid MAC for some of the users. This may lead to the situation in which the receiver erroneously believes that the packet is authentic. In the reference scheme, the probability that the attacker constructs a valid MAC is $1/2^M$.

On the other hand, under the disclosed protocol with Scheme 1, a MAC is declared valid if it coincides with the MAC obtained from any of the user's keys, which happens approximately with probability $K/2^M$. Even when $K$ is much smaller than $2^M$, this probability cannot be neglected. As an example, suppose $K = 10^5$ and $M = 32$, the probability that the attacker guesses correctly is in the order of $10^{-5}$, which means that an attacker would have to send a large number of packets to perform a successful attack. Under Scheme 2, the CRC decreases the attack success probability by a factor of $2^C$. In particular, if $C = \log_2 K$, then the scheme provides the same level of security as the reference scheme.

Although authentication may be desired in many applications, there may be situations in which it is less important, e.g., because additional authenticity can be obtained using non-cryptographic methods. This may for instance be the case in a control system, where the transmitted data represent sensor readings that can be expected to follow some predictable process. Since the protocol still provides confidentiality, an application-level error detection mechanism may be applied to provide additional confidentiality. Another scenario could be that the transmitter has access to a more secure side-channel that it can use occasionally to batch-verify the packets transmitted over the primary channel.

FIG. 19 illustrates an example of a method 1900 for generating authenticated data packets.

At 1901, the method may comprise obtaining payload data associated with a data source.

At 1902, the method may comprise computing a message authentication code based on a unique key of the data source and the payload data.

At 1903, the method may comprise obtaining an auxiliary identifier for the data source. A size of the auxiliary identifier may be smaller than a size of an identifier of the data source.

At 1904, the method may comprise determining a checksum based on the payload data, the message authentication code, and the auxiliary identifier.

FIG. 20 illustrates an example of a method 2000 for authenticating data packets.

At 2001, the method may comprise receiving a data packet associated with a data source, wherein the data packet comprises payload data and a message authentication code.

At 2002, the method may comprise computing a plurality of candidate message authentication codes based on the payload data and a plurality of unique keys associated with a plurality of candidate data sources.

At 2003, the method may comprise determining an identifier of the data source based on detecting a match between the message authentication code and one candidate message authentication code of the plurality of candidate message authentication codes.

Further features of the methods directly result from the functionalities and parameters of the methods and devices, for example node 110 or base station 120, as described in the appended claims and throughout the specification and are therefore not repeated here.

A device or a system may be configured to perform or cause performance of any aspect of the method(s) described herein. Further, a computer program may comprise program code configured to cause performance of an aspect of the method(s) described herein, when the computer program is executed on a computer. Further, the computer program product may comprise a computer readable storage medium storing program code thereon, the program code comprising instruction for performing any aspect of the method(s) described herein. Further, a device may comprise means for performing any aspect of the method(s) described herein. According to an example embodiment, the means comprises at least one processor, and at least one memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. Furthermore, references to 'at least one' item or 'one or more' items may refer to one or a plurality of those items.

The operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or device may contain additional blocks or elements.

It will be understood that the above description is given by way of example only and that various modifications may be made by those skilled in the art. The above specification, examples and data provide a complete description of the structure and use of exemplary embodiments.

Although various embodiments have been described above with a certain degree of particularity, or with reference to one or more individual embodiments, those skilled in the art could make numerous alterations to the disclosed embodiments without departing from scope of this specification.

**Claims**

1. A device (200) for generating a data packet (600), the device (200) configured to:

   obtain payload data associated with a data source;
   compute a message authentication code based on a unique key of the data source and the payload data, wherein the unique key of the data source is unique within a plurality of data sources;
   obtain an auxiliary identifier for the data source, wherein a size of the auxiliary identifier is smaller than a size of an identifier of the data source, wherein the auxiliary identifier is ambiguous within the plurality of data sources and the identifier of the data source is unambiguous within the plurality of data sources;
   determine a checksum based on the payload data, the message authentication code, and the auxiliary identifier, wherein determining the checksum based on the payload data, the message authentication code, and the auxiliary identifier comprises performing an exclusive-or operation for the checksum with the auxiliary identifier; and
   generate the data packet (600), wherein the data packet (600) comprises the payload data, the message authentication code, and the checksum and wherein the data packet (600) does not include an explicit identifier of the data source.

2. The device (200) according to claim 1, further configured to determine the auxiliary identifier as a function of the identifier of the data source.

3. The device (200) according to claim 1 or 2, wherein the auxiliary identifier comprises a subset of bits of the identifier of the data source.

4. The device (200) according to any preceding claim, wherein the device (200) is configured to compute the message authentication code further based on the identifier of the data source.

5. The device (200) according to any preceding claim, further configured to receive a cryptographic nonce, wherein the device (200) is configured to compute the message authentication code further based on the cryptographic nonce.

6. A device (200) for identifying a data source, the device (200) configured to:

receive a data packet (600) associated with a data source, wherein the data packet (600) comprises payload data, a message authentication code and a checksum;

determine an auxiliary identifier for the data source based on the checksum of the data packet (600), wherein a size of the auxiliary identifier is smaller than a size of an identifier of the data source, wherein the auxiliary identifier is ambiguous within a plurality of data sources and the identifier of the data source is unambiguous within the plurality of data sources;

determine a plurality of candidate data sources as a subset of a plurality of data sources, wherein the subset of the plurality of data sources is associated with the auxiliary identifier;

compute a plurality of candidate message authentication codes based on the payload data and a plurality of unique keys associated with the plurality of candidate data sources; and

determine the identifier of the data source based on detecting a match between the message authentication code and one candidate message authentication code of the plurality of candidate message authentication codes.

7. The device (200) according to claim 6, further configured to:

compute an auxiliary checksum based on the payload data and the message authentication code; and determine the auxiliary identifier based on an exclusive-or operation between the checksum of the data packet (600) and the auxiliary checksum.

8. The device (200) according to claim 6 or 7, wherein the auxiliary identifier comprises a subset of bits of the identifier of the data source.

9. The device (200) according to any of claims 6 to 8, further configured to determine a plurality of auxiliary identifiers for the plurality of data sources as a function of identifiers of the plurality of data sources.

10. A method (1900) for generating a data packet (600), the method comprising:

obtaining (1901) payload data associated with a data source;

computing (1902) a message authentication code based on a unique key of the data source and the payload data, wherein the unique key of the data source is unique within a plurality of data sources;

obtaining (1903) an auxiliary identifier for the data source, wherein a size of the auxiliary identifier is smaller than a size of an identifier of the data source, wherein the auxiliary identifier is ambiguous within the plurality of data sources and the identifier of the data source is unambiguous within the plurality of data sources;

determining (1904) a checksum based on the payload data, the message authentication code, and the auxiliary identifier, wherein determining the checksum based on the payload data, the message authentication code, and the auxiliary identifier comprises performing an exclusive-or operation for the checksum with the auxiliary identifier; and

generating the data naeket (600), wherein the data nacke (600) comprises the payload data, the message authentication code, and the checksum and wherein the data packet (600) does not include an explicit identifier of the data source.

11. A method (2000) for identifying a data source, the method comprising:

receiving (2001) a data packet (600) associated with a data source, wherein the data packet (600) comprises payload data, a message authentication code and a checksum;

determining an auxiliary identifier for the data source based on the checksum of the data packet (600), wherein a size of the auxiliary identifier is smaller than a size of an identifier of the data source, wherein the auxiliary identifier is ambiguous within a plurality of data sources and the identifier of the data source is unambiguous within the plurality of data sources;

determining a plurality of candidate data sources as a subset of a plurality of data sources, wherein the subset of the plurality of data sources is associated with the auxiliary identifier;

computing (2002) a plurality of candidate message authentication codes based on the payload data and a plurality of unique keys associated with the plurality of candidate data sources; and

determining (2003) the identifier of the data source based on detecting a match between the message authentication code and one candidate message authentication code of the plurality of candidate message authentication codes.

**12.** A computer program comprising program code configured to cause performance of the method according to claim 10 or 11, when the computer program is executed on a computer (200).

**Patentansprüche**

1. Vorrichtung (200) zum Erzeugen eines Datenpakets (600), wobei die Vorrichtung (200) konfiguriert ist zum:

   Abrufen von Nutzdaten, die mit einer Datenquelle verknüpft sind;
   Berechnen eines Nachrichtenauthentifizierungscodes basierend auf einem eindeutigen Schlüssel der Datenquelle und den Nutzdaten, wobei der eindeutige Schlüssel der Datenquelle innerhalb einer Vielzahl von Datenquellen eindeutig ist;
   Abrufen einer Hilfskennung für die Datenquelle, wobei eine Größe der Hilfskennung kleiner als eine Größe einer Kennung der Datenquelle ist, wobei die Hilfskennung innerhalb der Vielzahl von Datenquellen zweideutig ist und die Kennung der Datenquelle innerhalb der Vielzahl von Datenquellen unzweideutig ist;
   Bestimmen einer Prüfsumme basierend auf den Nutzdaten, dem Nachrichtenauthentifizierungscode und der Hilfskennung, wobei das Bestimmen der Prüfsumme basierend auf den Nutzdaten, dem Nachrichtenauthentifizierungscode und der Hilfskennung ein Durchführen einer Exklusiv-Oder-Operation für die Prüfsumme mit der Hilfskennung umfasst; und
   Erzeugen des Datenpakets (600), wobei das Datenpaket (600) die Nutzdaten, den Nachrichtenauthentifizierungscode und die Prüfsumme umfasst und wobei das Datenpaket (600) keine explizite Kennung der Datenquelle einschließt.

2. Vorrichtung (200) nach Anspruch 1, die ferner konfiguriert ist, um die Hilfskennung in Abhängigkeit von der Kennung der Datenquelle zu bestimmen.

3. Vorrichtung (200) nach Anspruch 1 oder 2, wobei die Hilfskennung eine Teilmenge von Bits der Kennung der Datenquelle umfasst.

4. Vorrichtung (200) nach einem der vorstehenden Ansprüche, wobei die Vorrichtung (200) konfiguriert ist, um den Nachrichtenauthentifizierungscode ferner basierend auf der Kennung der Datenquelle zu berechnen.

5. Vorrichtung (200) nach einem der vorstehenden Ansprüche, die ferner konfiguriert ist, um eine kryptografische Nonce zu empfangen, wobei die Vorrichtung (200) konfiguriert ist, um den Nachrichtenauthentifizierungscode ferner basierend auf der kryptografischen Nonce zu berechnen.

6. Vorrichtung (200) zum Identifizieren einer Datenquelle, wobei die Vorrichtung (200) konfiguriert ist zum:

   Empfangen eines Datenpakets (600), das mit einer Datenquelle verknüpft ist, wobei das Datenpaket (600) Nutzdaten, einen Nachrichtenauthentifizierungscode und eine Prüfsumme umfasst;
   Bestimmen einer Hilfskennung für die Datenquelle basierend auf der Prüfsumme des Datenpakets (600), wobei eine Größe der Hilfskennung kleiner als eine Größe einer Kennung der Datenquelle ist, wobei die Hilfskennung innerhalb einer Vielzahl von Datenquellen zweideutig ist und die Kennung der Datenquelle innerhalb der Vielzahl von Datenquellen unzweideutig ist;
   Bestimmen einer Vielzahl von Kandidatendatenquellen als eine Teilmenge einer Vielzahl von Datenquellen, wobei die Teilmenge der Vielzahl von Datenquellen mit der Hilfskennung verknüpft ist;
   Berechnen einer Vielzahl von Kandidatennachrichtenauthentifizierungscodes basierend auf den Nutzdaten und einer Vielzahl von eindeutigen Schlüsseln, die mit der Vielzahl von Kandidatendatenquellen verknüpft sind; und
   Bestimmen der Kennung der Datenquelle basierend auf einem Erkennen einer Übereinstimmung zwischen dem Nachrichtenauthentifizierungscode und einem Kandidatennachrichtenauthentifizierungscode der Vielzahl von Kandidatennachrichtenauthentifizierungscodes.

7. Vorrichtung (200) nach Anspruch 6, die ferner konfiguriert ist zum:

   Berechnen einer Hilfsprüfsumme basierend auf den Nutzdaten und dem Nachrichtenauthentifizierungscode; und
   Bestimmen der Hilfskennung basierend auf einer Exklusiv-Oder-Operation zwischen der Prüfsumme des Datenpakets (600) und der Hilfsprüfsumme.

8. Vorrichtung (200) nach Anspruch 6 oder 7, wobei die Hilfskennung eine Teilmenge von Bits der Kennung der Datenquelle umfasst.

9. Vorrichtung (200) nach einem der Ansprüche 6 bis 8, die ferner konfiguriert ist, um eine Vielzahl von Hilfskennungen für die Vielzahl von Datenquellen in Abhängigkeit von Kennungen der Vielzahl von Datenquellen zu bestimmen.

10. Verfahren (1900) zum Erzeugen eines Datenpakets (600), wobei das Verfahren umfasst:

Erhalten (1901) von Nutzdaten, die mit einer Datenquelle verknüpft sind;
Berechnen (1902) eines Nachrichtenauthentifizierungscodes basierend auf einem eindeutigen Schlüssel der Datenquelle und den Nutzdaten, wobei der eindeutige Schlüssel der Datenquelle innerhalb einer Vielzahl von Datenquellen eindeutig ist;
Abrufen (1903) einer Hilfskennung für die Datenquelle, wobei eine Größe der Hilfskennung kleiner als eine Größe einer Kennung der Datenquelle ist, wobei die Hilfskennung innerhalb der Vielzahl von Datenquellen zweideutig ist und die Kennung der Datenquelle innerhalb der Vielzahl von Datenquellen unzweideutig ist;
Bestimmen (1904) einer Prüfsumme basierend auf den Nutzdaten, dem Nachrichtenauthentifizierungscode und der Hilfskennung, wobei das Bestimmen der Prüfsumme basierend auf den Nutzdaten, dem Nachrichtenauthentifizierungscode und der Hilfskennung das Durchführen einer Exklusiv-Oder-Operation für die Prüfsumme mit der Hilfskennung umfasst; und
Erzeugen des Datenpakets (600), wobei das Datenpaket (600) die Nutzdaten, den Nachrichtenauthentifizierungscode und die Prüfsumme umfasst und wobei das Datenpaket (600) keine explizite Kennung der Datenquelle einschließt.

11. Verfahren (2000) zum Identifizieren einer Datenquelle, wobei das Verfahren umfasst:

Empfangen (2001) eines Datenpakets (600), das mit einer Datenquelle verknüpft ist,
wobei das Datenpaket (600) Nutzdaten, einen Nachrichtenauthentifizierungscode und eine Prüfsumme umfasst;
Bestimmen einer Hilfskennung für die Datenquelle basierend auf der Prüfsumme des Datenpakets (600), wobei eine Größe der Hilfskennung kleiner als eine Größe einer Kennung der Datenquelle ist, wobei die Hilfskennung innerhalb einer Vielzahl von Datenquellen zweideutig ist und die Kennung der Datenquelle innerhalb der Vielzahl von Datenquellen unzweideutig ist;
Bestimmen einer Vielzahl von Kandidatendatenquellen als eine Teilmenge einer Vielzahl von Datenquellen, wobei die Teilmenge der Vielzahl von Datenquellen mit der Hilfskennung verknüpft ist;
Berechnen (2002) einer Vielzahl von Kandidatennachrichtenauthentifizierungscodes basierend auf den Nutzdaten und einer Vielzahl von eindeutigen Schlüsseln, die mit der Vielzahl von Kandidatendatenquellen verknüpft sind; und Bestimmen (2003) der Kennung der Datenquelle basierend auf dem Erkennen einer Übereinstimmung zwischen dem Nachrichtenauthentifizierungscode und einem Kandidatennachrichtenauthentifizierungscode der Vielzahl von Kandidatennachrichtenauthentifizierungscodes.

12. Computerprogramm, das einen Programmcode umfasst, der konfiguriert ist, um die Durchführung des Verfahrens nach Anspruch 10 oder 11 zu veranlassen, wenn das Computerprogramm auf einem Computer (200) ausgeführt wird.


**Revendications**

1. Dispositif (200) permettant de générer un paquet de données (600), le dispositif (200) étant configuré pour :

obtenir des données de charge utile associées à une source de données ;
calculer un code d'authentification de message sur la base d'une clé unique de la source de données et des données de charge utile, dans lequel la clé unique de la source de données est unique au sein d'une pluralité de sources de données ;
obtenir un identifiant auxiliaire pour la source de données, dans lequel une taille de l'identifiant auxiliaire est inférieure à une taille d'un identifiant de la source de données, dans lequel l'identifiant auxiliaire est ambigu au sein de la pluralité de sources de données et l'identifiant de la source de données est univoque au sein de la pluralité de sources de données ;
déterminer un total de contrôle sur la base des données de charge utile, du code d'authentification de message, et de l'identifiant auxiliaire, dans lequel la détermination du total de contrôle sur la base des données de charge utile, du code d'authentification de message et de l'identifiant auxiliaire comprend la réalisation d'une opération OU exclusif pour le total de contrôle avec l'identifiant auxiliaire ; et
générer le paquet de données (600), dans lequel le paquet de données (600) comprend les données de charge utile, le code d'authentification de message, et le total de contrôle et dans lequel le paquet de données (600) ne comporte pas d'identifiant explicite de la source de données.

2. Dispositif (200) selon la revendication 1, configuré en outre pour déterminer l'identifiant auxiliaire en fonction de l'identifiant de la source de données.

3. Dispositif (200) selon la revendication 1 ou 2, dans lequel l'identifiant auxiliaire comprend un sous-ensemble de bits de l'identifiant de la source de données.

4. Dispositif (200) selon l'une quelconque revendication précédente, dans lequel le dispositif (200) est configuré pour calculer le code d'authentification de message en outre sur la base de l'identifiant de la source de données.

5. Dispositif (200) selon l'une quelconque revendication précédente, configuré en outre pour recevoir un nonce cryptographique, dans lequel le dispositif (200) est configuré pour calculer le code d'authentification de message en outre sur la base du nonce cryptographique.

6. Dispositif (200) permettant d'identifier une source de données, le dispositif (200) étant configuré pour :

    recevoir un paquet de données (600) associé à une source de données, dans lequel le paquet de données (600) comprend des données de charge utile, un code d'authentification de message et un total de contrôle ;
    déterminer un identifiant auxiliaire pour la source de données sur la base du total de contrôle du paquet de données (600), dans lequel une taille de l'identifiant auxiliaire est inférieure à une taille d'un identifiant de la source de données, dans lequel l'identifiant auxiliaire est ambigu au sein d'une pluralité de sources de données et l'identifiant de la source de données est univoque au sein de la pluralité de sources de données ;
    déterminer une pluralité de sources de données candidates en tant que sous-ensemble d'une pluralité de sources de données, dans lequel le sous-ensemble de la pluralité de sources de données est associé à l'identifiant auxiliaire ;
    calculer une pluralité de codes d'authentification de message candidats sur la base des données de charge utile et d'une pluralité de clés uniques associées à la pluralité de sources de données candidates ; et
    déterminer l'identifiant de la source de données sur la base de la détection d'une correspondance entre le code d'authentification de message et un code d'authentification de message candidat parmi la pluralité de codes d'authentification de message candidats.

7. Dispositif (200) selon la revendication 6, configuré en outre pour :

    calculer un total de contrôle auxiliaire sur la base des données de charge utile et du code d'authentification de message ; et
    déterminer l'identifiant auxiliaire sur la base d'une opération OU exclusif entre le total de contrôle du paquet de données (600) et le total de contrôle auxiliaire.

8. Dispositif (200) selon la revendication 6 ou 7, dans lequel l'identifiant auxiliaire comprend un sous-ensemble de bits de l'identifiant de la source de données.

9. Dispositif (200) selon l'une quelconque des revendications 6 à 8, configuré en outre pour déterminer une pluralité d'identifiants auxiliaires pour la pluralité de sources de données en fonction d'identifiants de la pluralité de sources de données.

10. Procédé (1900) permettant de générer un paquet de données (600), le procédé comprenant :

    l'obtention (1901) de données de charge utile associées à une source de données ;
    le calcul (1902) d'un code d'authentification de message sur la base d'une clé unique de la source de données et des données de charge utile, dans lequel la clé unique de la source de données est unique au sein d'une pluralité de sources de données ;
    l'obtention (1903) d'un identifiant auxiliaire pour la source de données, dans lequel une taille de l'identifiant auxiliaire est inférieure à une taille d'un identifiant de la source de données, dans lequel l'identifiant auxiliaire est ambigu au sein de la pluralité de sources de données et l'identifiant de la source de données est univoque au sein de la pluralité de sources de données ;

la détermination (1904) d'un total de contrôle sur la base des données de charge utile, du code d'authentification de message et de l'identifiant auxiliaire, dans lequel la détermination du total de contrôle sur la base des données de charge utile, du code d'authentification de message, et de l'identifiant auxiliaire comprend la réalisation d'une opération OU exclusif pour le total de contrôle avec l'identifiant auxiliaire ; et

la génération du paquet de données (600), dans lequel le paquet de données (600) comprend les données de charge utile, le code d'authentification de message, et le total de contrôle et dans lequel le paquet de données (600) ne comporte pas d'identifiant explicite de la source de données.

11. Procédé (2000) permettant d'identifier une source de données, le procédé comprenant :

la réception (2001) d'un paquet de données (600) associé à une source de données, dans lequel le paquet de données (600) comprend des données de charge utile, un code d'authentification de message et un total de contrôle ;

la détermination d'un identifiant auxiliaire pour la source de données sur la base du total de contrôle du paquet de données (600), dans lequel une taille de l'identifiant auxiliaire est inférieure à une taille d'un identifiant de la source de données, dans lequel l'identifiant auxiliaire est ambigu au sein d'une pluralité de sources de données et l'identifiant de la source de données est univoque au sein de la pluralité de sources de données ;

la détermination d'une pluralité de sources de données candidates en tant que sous-ensemble d'une pluralité de sources de données, dans lequel le sous-ensemble de la pluralité de sources de données est associé à l'identifiant auxiliaire ;

le calcul (2002) d'une pluralité de codes d'authentification de message candidats sur la base des données de charge utile et d'une pluralité de clés uniques associées à la pluralité de sources de données candidates ; et la détermination (2003) de l'identifiant de la source de données sur la base de la détection d'une correspondance entre le code d'authentification de message et un code d'authentification de message candidat parmi la pluralité de codes d'authentification de message candidats.

12. Programme informatique comprenant un code de programme configuré pour provoquer la réalisation du procédé selon la revendication 10 ou 11, lorsque le programme informatique est exécuté sur un ordinateur (200).

100

120

Base station

110

Node

112

Node

114

Node

## FIG. 1

200

202

PROCESSOR

204

MEMORY

PROGRAM CODE

206

COMMUNICATION INTERFACE

208

## FIG. 2

300

| PHY header | Address | Information bits | MAC |
|:---:|:---:|:---:|:---:|
| $h_i$ | $a_i$ | $d_i$ | $m_i$ |
| $H$ | $A$ | $D$ | $M$ |

## FIG. 3

400

| PHY header | Information bits | MAC (address) |
|:---:|:---:|:---:|
| $h_i$ | $d_i$ | $m_i$ |
| $H$ | $D$ | $M$ |

## FIG. 4

500

501 — ( Receive packet )

502 — Initialize a set of valid addresses and set $i = 1$

503 — Select key $k_i$ associated with address $a_i$

504 — Compute a candidate MAC based on the received data and key $k_i$

505 — Candidate MAC equal to received MAC?

No

Yes

508 — $i = i + 1$

506 — Update the set of valid addresses with $a_i$

507 — $i = K$?

No

Yes

509 — ( Return the set of valid addresses )

FIG. 5

600

| PHY header | Information bits | MAC (address) | Checksum (auxiliary ID) |
|:---:|:---:|:---:|:---:|
| $h_i$ | $d_i$ | $m_i$ | $c_i''$ |
| $H$ | $D$ | $M$ | $C$ |

## FIG. 6

700

701 — Start

702 — Obtain payload data by a node associated with address $a_i$

703 — Compute an auxiliary identifier $j_i$ for the node based on its address $a_i$

704 — Select key $k_i$ associated with address $a_i$

705 — Compute a MAC based on the payload data and the key $k_i$

706 — Compute a checksum based on the payload data and the MAC

707 — Perform an XOR operation between the checksum and the auxiliary identifier

708 — Construct a packet comprising the payload data, the MAC, and the XOR'ed checksum

709 — Output packet

## FIG. 7

FIG. 8

|  | Reference scheme | Scheme 1 | Scheme 2 |
|---|---|---|---|
| **Overhead Reduction** | $0$ | $1 - \dfrac{D + M}{A + D + M}$ | $1 - \dfrac{D + M + C}{A + D + M}$ |
| **Spectral Efficiency** | $(A + M + C)R^{-1}$ | $(D + M)R^{-1}$ | $(D + M + C)R^{-1}$ |
| **Complexity** | $1$ | $K = 2^A$ | $1 + \dfrac{K - 1}{2^C} \approx 2^{A-C}$ |
| **Identification Failure Rate** | $0$ | $2^{-(M-A)}$ | $2^{-((M+C)-A)}$ |
| **Authentication Security** | $2^{-M}$ | $K \cdot 2^{-M} = 2^{-(M-A)}$ | $K \cdot 2^{-(M+C)} = 2^{-((M+C)-A)}$ |

FIG. 9

FIG. 10

FIG. 11

FIG. 12

FIG. 13

FIG. 14

FIG. 15

35

FIG. 16

FIG. 17

FIG. 18

1900

```
┌─────────────────────────────────────────────────┐
│                      1901                         │
│   Obtaining payload data associated with a        │
│                 data source                       │
└─────────────────────────────────────────────────┘
                        │
                        ▼
┌─────────────────────────────────────────────────┐
│                      1902                         │
│   Computing a message authentication code based   │
│   on a unique key of the data source and the      │
│                 payload data                      │
└─────────────────────────────────────────────────┘
                        │
                        ▼
┌─────────────────────────────────────────────────┐
│                      1903                         │
│   Obtaining an auxiliary identifier for the       │
│                 data source                       │
└─────────────────────────────────────────────────┘
                        │
                        ▼
┌─────────────────────────────────────────────────┐
│                      1904                         │
│   Determining a checksum based on the payload     │
│   data, the message authentication code, and the  │
│             auxiliary identifier                  │
└─────────────────────────────────────────────────┘
```

FIG. 19

2000

```
┌─────────────────────────────────────────────────┐
│                      2001                         │
│   Receiving a data packet associated with a data  │
│   source, wherein the data packet comprises       │
│   payload data and a message authentication code  │
└─────────────────────────────────────────────────┘
                        │
                        ▼
┌─────────────────────────────────────────────────┐
│                      2002                         │
│   Computing a plurality of candidate message      │
│   authentication codes based on the payload data  │
│   and a plurality of unique keys associated with  │
│   a plurality of candidate data sources           │
└─────────────────────────────────────────────────┘
                        │
                        ▼
┌─────────────────────────────────────────────────┐
│                      2003                         │
│   Determining an identifier of the data source    │
│   based on detecting a match between the message  │
│   authentication code and one candidate message   │
│   authentication code of the plurality of         │
│   candidate message authentication codes          │
└─────────────────────────────────────────────────┘
```

FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019040963 A1

- US 2016100311 A1

**Non-patent literature cited in the description**

- **3GPP.** 3rd Generation Partnership Project; Technical Specification Group Services and System Aspects; Rationale and track of security decisions in Long Term Evolved (LTE) RAN / 3GPP System Architecture Evolution (SAE) (Release 8). *3GPP DRAFT; S3-070478-TR33821-V030-TR, 3RD GENERATION PARTNERSHIP PROJECT (3GPP), MOBILE COMPETENCE CENTRE, SOPHIA-ANTIPOLIS, FRANCE,* 30 August 2007, vol. SA WG5 (Roma